(19)

Europäisches Patentamt
European Patent Office
Office européen des brevets

(11)  **EP 2 028 895 B1**

(12)  # EUROPÄISCHE PATENTSCHRIFT

(45) Veröffentlichungstag und Bekanntmachung des Hinweises auf die Patenterteilung:
**13.08.2014  Patentblatt 2014/33**

(51) Int Cl.:
**H04W 48/18** *(2009.01)*     *H04W 60/00* *(2009.01)*
**H04W 80/04** *(2009.01)*

(21) Anmeldenummer: **08009339.6**

(22) Anmeldetag: **21.05.2008**

(54) **Verfahren und Kommunikationssystem für Multihoming durch einem mobilen Router mit Lastverteilung**

Communication method and system for multihoming through a mobile load balancing router

Procédé et système de communication pour rattachement multiple par un routeur mobile avec partage de charge

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **26.07.2007  DE 102007035391**

(43) Veröffentlichungstag der Anmeldung:
**25.02.2009  Patentblatt 2009/09**

(73) Patentinhaber: **Deutsche Telekom AG**
**53113 Bonn (DE)**

(72) Erfinder:
• **Zimmermann, Gerd**
**64331 Weiterstadt (DE)**
• **Xu, Bangnan**
**64291 Darmstadt (DE)**
• **Kilb, Sascha**
**67240 Bobenheim-Roxheim (DE)**
• **Sivchenko, Dmitry**
**64293 Darmstadt (DE)**

(74) Vertreter: **Blumbach Zinngrebe**
**Patentanwälte**
**Alexandrastrasse 5**
**65187 Wiesbaden (DE)**

(56) Entgegenhaltungen:
**US-A1- 2005 185 653**

• **AUST S ET AL: "Policy Based Mobile IPv6 Handover Decision (POLIMAND); draft-iponair-dna-polimand-02.txt" INTERNET ENGINEERING TASK FORCE (IETF), 21. Februar 2005 (2005-02-21), XP015030153**
• **CACACE F ET AL: "Managing Mobility and Adaptation in Upcoming 802.21 Enabled Devices" PROCEEDINGS OF THE 4TH ACM INTERNATIONAL WORKSHOP ON WIRELESS MOBILE APPLICATIONS AND SERVICES ON WLAN HOTSPOTS (WMASH), 29. September 2006 (2006-09-29), XP007905498 ISBN: 978-1-59593-470-3**
• **WAKIKAWA R ET AL: "ENHANCED MOBILE NETWORK PROTOCOL FOR ITS ROBUSTNESS AND POLICY BASED ROUTING", IEICE TRANSACTIONS ON COMMUNICATIONS, COMMUNICATIONS SOCIETY, TOKYO, JP, vol. E87B, no. 3, 1 March 2004 (2004-03-01), pages 445-457, XP001503178, ISSN: 0916-8516**

**Beschreibung**

Die Erfindung betrifft im Allgemeinen ein Verfahren und ein Kommunikationssystem, welche eine effiziente Datenübertragung für mobile Knoten, die zum Beispiel in Hochgeschwindigkeitszügen implementiert sind, unter Verwendung mehrerer Kommunikationsverbindungen ermöglichen. Insbesondere betrifft die Erfindung ein Verfahren sowie ein Kommunikationssystem zur unterbrechungsfreien Datenübertragung zwischen einem mobilen Knoten und wenigstens einem IP-Teilnehmer, der mit einem öffentlichen IP-Netz verbunden ist, wobei der mobile Knoten mehrere Netzwerk-Funkschnittstellen aufweist. Weiterhin betrifft die Erfindung einen mobilen Knoten sowie eine Kommunikations-Verwaltungseinrichtung, die zum Einsatz in einem solchen Kommunikationsnetz ausgebildet sind.

In Zukunft wird das Interesse von Fahrgästen immer mehr zunehmen, während der Fahrt zum Beispiel in einem Zug oder einem Bus mit Teilnehmern eines öffentlichen IP-Netzes, insbesondere dem Internet, kommunizieren zu können.

Die US Patentanmeldung US 2005/0185653 A1 offenbart eine Kommunikationsvorrichtung, die fähig ist, eine geeignetes Netz in Abhängigkeit von der Qualität der Funkverbindung von einem Netzwerk und in Abhängigkeit von Erfordernissen einerAnwendung auszuwählen. Wenn die Kommunikation mit einem entsprechenden Knoten über mehrere Netze durchgeführt wird, dann werden Kommunikationsqualitätsinformationen für jedes der Netze erlangt.
Eine Speichereinheit speichert Bedingungen, die für Anwendungen im Netz erforderlich sind. The benötigten Bedingungen und die Kommunikationsqualitätsinformationen der jeweiligen Netze werden miteinander verglichen, eines die Bedingungen erfüllendes Netzwerk wird ausgewählt und die Kommunikation erfolgt über das ausgewählte Netzwerk.

Das Dokument von AUST S ET AL: "Policy Based Mobile Ipv6 Handover Decision (POLIMAND); draft-iponair-dna-polimand-02.txt", IETF, 21. Februar 2005, XP015030153 offenbart einen Übergabeprozess, bei dem ein mobiler Knoten zwischen Zugangsnetze übergeben wird. Insbesondere für vertikale Übergaben in Overlay-Netzen ändert der mobile Knoten das Zugangsnetz mit mehreren Schnittstellen einschließlich unterschiedlicher Verbindungsschichten, wie zum Beispiel WLAN, GPRS, UMTS.

Das Dokument von R. Wakikawa et al.: "Enhanced Mobile Network Protocol for Its Robustness and Policy Based Routing", IEICE Transactions on Communications, Communications Society, März 2004, beschreibt Verfahren zur Netzwerk-Mobilität unter Verwendung mobiler Multihomingfähiger Router mit mehreren Netzwerk-Schnittstellen, wobei eine Datenverkehrslast verteilt werden kann, indem die Charakteristiken jedes Datenverkehrs mit denen der Netzwerk-Schnittstellen verglichen werden und dementsprechend die Netzwerk-Schnittstelle für den jeweiligen Datenverkehr ausgewählt wird.

Die vorliegende Erfindung hat sich die Aufgabe gestellt, ein Verfahren und ein Kommunikationssystem bereitzustellen, mit denen Datenpakete von einem mobilen Knoten oder auch zu einem mobilen Knoten mit einem hohen Datendurchsatz und im Wesentlichen unterbrechungsfrei übertragen werden können, auch wenn sich der mobile Knoten bewegt.

Ein Kerngedanke der Erfindung ist darin zu sehen, Maßnahmen bereitzustellen, mit denen ein mobiler Knoten Datenpakete über mehrere Netzwerk-Funkschnittstellen unter Berücksichtigung der Verbindungsqualität verfügbarer Kommunikationsverbindungen über ein öffentliches IP-Netz senden als auch empfangen kann. Die Verbindungsqualität wird im Wesentlichen durch den aktuell verfügbaren Datendurchsatz und die Übertragungsverzögerung (Round Trip Time, RTT) bestimmt. In vorteilhafter Weise wird eine unterbrechungsfreie Datenübertragung dadurch sichergestellt, dass bei Ausfall einer Kommunikationsvebindung oder bei Änderung der IP-Adresse einer Netzwerk-Funkschnittstelle die Datenpakete auf die verbleibenden verfügbaren Kommunikationsverbindung verteilt werden, während über die Netzwerk-Funkschnittstelle, deren IP-Adresse geändert worden ist, wieder eine Kommunikationsverbindung aufgebaut wird. Dies wird insbesondere durch die Verwendung einer mit dem öffentlichen IP-Netz verbundenen Kommunikations-Verwaltungseinrichtung erreicht, die die Datenübertragung vom mobilen Knoten zu einem IP-Teilnehmer und von einem IP-Teilnehmer zum mobilen Knoten unterstützt.

Das obengenannte technische Problem wird durch ein Verfahren zur unterbrechungsfreien Datenübertragung zwischen einem mobilen Knoten und wenigstens einem IP-Teilnehmer, der mit einem öffentlichen IP-Netz verbunden ist, gelöst. Bei dem öffentlichen IP-Netz handelt es sich vorzugsweise um das Internet. Der mobile Knoten weist mehrere Netzwerk-Funkschnittstellen auf, die unterschiedliche Zugangstechnologien unterstützen können. Wenigstens einigen der Netzwerk-Funkschnittstellen wird jeweils eine IP-Adresse zugeordnet, die wenigstens einem IP-Bereich zugeordnet ist.

Angemerkt sei an dieser Stelle, dass den Netzwerk-Funkschnittstellen jeweils eine IP-Adresse von wenigstens einem Zugangsnetz zugewiesen wird, wenn der mobile Knoten sich im Versorgungsbereich wenigstens eines Anbindungspunktes (Point of Attachment to the Network; PoAN) wenigstens eines Zugangsnetzes befindet. Zwischen jeder Netzwerk-Funkschnittstelle, der eine IP-Adresse zugeordnet worden ist, und wenigstens einer Kommunikations-Verwaltungseinrichtung, die mit dem IP-Netz verbunden ist, wird eine Kommunikationsverbindung aufgebaut. Insbesondere handelt es sich bei der Kommunikationsverbindung um einen Transporttunnel, der einem IP-in-IP-Tunnel oder einem IP-in- UDP-Tunnel, beispielsweise OpenVPN, entsprechen kann.

Die Verbindungsqualität jeder aufgebauten Kommunikationsverbindung wird zu vorbestimmten Zeitpunkten ermittelt. Parameter der Verbindungsqualitäten sind beispielsweise der Datendurchsatz und die Übertragungsverzögerung, im Englischen auch Round Trip Time genannt. Am mobilen Knoten wird wenigstens ein Datenpaket bereitgestellt, das zu wenigstens einem mit dem öffentlichen IP-Netz verbundenen IP-Teilnehmer übertragen werden soll. Das wenigstens eine Datenpaket wird über wenigstens eine Kommunikationsverbindung zur Kommunikations-Verwaltungseinrichtung übertragen, wobei die wenigstens eine Kommunikationsverbindung vom mobilen Knoten in Abhängigkeit von den ermittelten Verbindungsqualitäten ausgewählt wird. Bei der Auswahl der geeigneten Kommunikationsverbindung wird in vorteilhafter Weise darauf geachtet, dass der für den mobilen Knoten verfügbare Durchsatz bei minimaler Übertragungsverzögerung maximiert werden kann. Das an der Kommunikations-Verwaltungseinrichtung empfangene Datenpaket wird dann über das öffentliche IP-Netz zu dem oder den jeweiligen IP-Teilnehmern weitergeleitet.

Um Datenpakete am mobilen Knoten oder der Kommunikations-Vermittlungsstelle ordnungsgemäß empfangen und weiterverarbeiten zu können, wird jeder aufgebauten Kommunikationsverbindung eine logische Adresse zugeordnet, wobei nach dem Aufbau der jeweiligen Kommunikationsverbindung die logischen Adressen der Kommunikationsverbindung und die IP-Adresse der entsprechenden Netzwerk-Schnittstelle in der Kommunikations-Verwaltungseinrichtung gespeichert werden. Eine der Kommunikations-Verwaltungseinrichtung zugeordnete IP-Adresse wird zudem im mobilen Knoten gespeichert.

Eine unterbrechungsfreie Datenübertragung soll auch ermöglicht werden, wenn sich der mobile Knoten, der vorzugsweise in einem Fahrzeug installiert ist, bewegt. Da bei Bewegung der mobile Knoten den Versorgungsbereich der Anbindungspunkte eines Zugangsnetzes und unter Umständen auch das Zugangsnetz wechselt, müssen den Netzwerk-Funkschnittstellen des mobilen Knotens bei einem derartigen Wechsel neue IP-Adressen zugeordnet werden. Die Zuordnung neuer IP-Adressen übernimmt in an sich bekannter Weise vorzugsweise das Zugangsnetz selbst. Die hierzu eingesetzten Handover-Mechanismen sind nicht Gegenstand der vorliegenden Erfindung. Dank der Verwendung der Kommunikations-Verwaltungseinrichtung wird sichergestellt, dass eine bestehende Datenübertragung zwischen dem mobilen Knoten und einem IP-Teilnehmer auch beim Wechsel der IP-Adresse der Netzwerk-Funkschnittstelle oder Ausfall einer Kommunikationsverbindung bestehen bleibt. Nunmehr kann eine neue Kommunikationsverbindung zwischen der Netzwerk-Funkschnittstelle, deren IP-Adresse geändert worden ist, und der Kommunikations-Verwaltungseinrichtung aufgebaut werden. Die neu zugewiesenen IP-Adressen werden im mobilen Knoten und der Kommunikations-Verwaltungseinrichtung gespeichert.

Damit die Kommunikations-Verwaltungseinrichtung mit mehreren mobilen Knoten kommunizieren kann, ist jedem mobilen Knoten eine individuelle Kennung zugeordnet, die in der Kommunikations-Verwaltungseinrichtung gespeichert wird. In Verbindung mit den logischen Adressen der aufgebauten Kommunikationsverbindung kann somit die Kommunikations-Verwaltungseinrichtung feststellen, von welchem mobilen Knoten und von welcher Kommunikationsverbindung Daten empfangen worden sind und zu welchem mobilen Knoten Daten zu übertragen sind.

In vorteilhafter Weise sollen Datenpakete in effizienter Weise nicht nur vom mobilen Knoten zu einem IP-Teilnehmer, sondern auch von einem IP-Teilnehmer zum mobilen Knoten übertragen werden. Hierzu wird wenigstens ein für den mobilen Knoten bestimmtes Datenpaket von wenigstens einem mit dem öffentlichen IP-Netz verbundenen IP-Teilnehmer zur Kommunikations-Verwaltungseinrichtung übertragen. Das wenigstens eine Datenpaket kann über wenigstens eine bestehende Kommunikationsverbindung zum mobilen Knoten weitergeleitet werden, wobei die wenigstens eine Kommunikationsverbindung von der Kommunikations-Verwaltungseinrichtung in Abhängigkeit von den ermittelten Verbindungsqualitäten ausgewählt wird. Auf diese Weise ist eine unterbrechungsfreie und effiziente Datenübertragung nicht nur vom mobilen Knoten zu einem IP-Teilnehmer, sondern auch von einem IP-Teilnehmer des öffentlichen IP-Netzes zum mobilen Knoten gewährleistet. Somit kann der für den mobilen Knoten verfügbare Durchsatz in beide Richtungen, d. h. für abgehende Datenpakete und für ankommende Datenpakete effizient gesteuert werden.

Zu übertragende Datenpakete können, sowohl in Richtung zum mobilen Knoten als auch in Richtung vom mobilen Knoten zur Kommunikations-Verwaltungseinrichtung, auf verfügbare Kommunikationsverbindungen paketbasiert und/oder sitzungsbasiert verteilt werden. Bei der paketbasierten Lastverteilung wird für jedes zu übertragende Datenpaket eine Kommunikationsverbindung in Abhängigkeit von den ermittelten Verbindungsqualitäten ausgewählt. Bei der Übermittlung von Datenpaketen einer Sitzung wird zunächst geprüft, ob ein zu übertragendes Datenpaket zu einer bestimmten Sitzung gehört. Anschließend werden alle Datenpakete, die zu einer Sitzung gehören, über dieselbe Kommunikationsverbindung übertragen, die für diese Sitzung ausgewählt worden ist. Ein Wechsel der Kommunikationsverbindung findet nur statt, wenn die Kommunikationsverbindung, über die die Datenpakete der Sitzung übertragen werden, ausfällt, oder der Durchsatz des mobilen Knotens durch einen Wechsel der Kommunikationsverbindung verbessert werden kann.

Gemäß einer bevorzugten Ausführungsform wird die Kommunikationsverbindung zur Übertragung eines Datenpakets unter Verwendung der für die Kommunikationsverbindung ermittelten durchschnittlichen Datendurchsätze ausgewählt. Hierzu wird im mobilen Knoten die gesendete Datenmenge $T_{s,k}n$ pro Zeiteinheit für jede aufgebaute Kommunikationsverbindung ermittelt oder gezählt. Beispielsweise wird die Größe der übertragenen Datenpakete ermittelt.

Darüber hinaus wird in der Kommunikations-Verwaltungseinrichtung die über die jeweilige Kommunikationsverbindung empfangene Datenmenge $T_{e,v}n$ pro Zeiteinheit bestimmt. Vorzugsweise wird die von der Kommunikations-Verwaltungseinrichtung gezählte, empfangene Datenmenge zum mobilen Knoten übertragen. Für jede Kommunikationsverbindung wird dann die Datendifferenz $dT_{u,n} = T_{s,k}n - T_{e,v}n$ gebildet, wobei n die Anzahl aufgebauter Kommunikationsverbindungen ist und "s, k" den sendenden mobilen Knoten und "e, v" die empfangende Kommunikations-Verwaltungseinrichtung bezeichnet. Dann wird die Kommunikationsverbindung mit der kleinsten Differenz ausgewählt, über welche das wenigstens eine Datenpaket vom mobilen Knoten zur Kommunikations-Verwaltungseinrichtung übertragen wird. Die Datendifferenz wird vorzugsweise im mobilen Knoten selbst berechnet.

Alternativ oder zusätzlich wird in der Kommunikations-Verwaltungseinrichtung die zum mobilen Knoten gesendete Datenmenge $T_{s,v}n$ pro Zeiteinheit für jede aufgebaute Kommunikationsverbindung bestimmt. Im mobilen Knoten wird die über die jeweilige Kommunikationsverbindung empfangene Datenmenge $T_{e,k}n$ pro Zeiteinheit bestimmt. Anschließend wird für jede Kommunikationsverbindung die Datendifferenz $dT_{d,n} = T_{s,v}n - T_{e,k}n$ gebildet, wobei n die Anzahl aufgebauter Kommunikationsverbindungen ist und "s, v" die sendende Kommunikations-Verwaltungseinrichtung und "e, k" den empfangenden mobilen Knoten bezeichnet. Die Datendifferenz kann in der Kommunikations-Verwaltungseinrichtung berechnet werden, wenn vorher die im mobilen Knoten ermittelte empfangene Datenmenge pro Zeiteinheit zur Kommunikations-Verwaltungseinrichtung übertragen wird.

Um das wenigstens eine Datenpaket von der Kommunikations-Verwaltungseinrichtung zum mobilen Knoten übertragen zu können, wird vorzugsweise die Kommunikationsverbindung mit der kleinsten Differenz ausgewählt.

Um die Lastverteilung effizienter gestalten zu können, wird im mobilen Knoten und in der Kommunikations-Verwaltungseinrichtung für jede Netzwerk-Funkschnittstelle eine mittlere Übertragungszeit (Round Trip Time) gespeichert. Die mittlere Übertragungsverzögerung ist von der Zugangstechnologie der Netzwerk-Funkschnittstelle abhängig und wird vor Inbetriebnahme abgelegt. Um das wenigstens eine Datenpaket vom mobilen Knoten zur Kommunikations-Verwaltungseinrichtung und/oder umgekehrt übertragen zu können, wird die Kommunikationsverbindung in Abhängigkeit von der Datendifferenz und/oder der mittleren Übertragungsverzögerung ausgewählt.

Für den Fall, dass mehrere Kommunikationsverbindungen mit der gleichen Datendifferenz zur Verfügung stehen, kann die Kommunikationsverbindung ausgewählt werden, deren verwendete Netzwerk-Funkschnittstelle die kleinste mittlere Übertragungsverzögerung aufweist.

Die Verteilung zu übertragender Datenpakete über mehrere verfügbare Kommunikationsverbindungen kann weiterhin verbessert werden, wenn für jede Netzwerk-Funkschnittstelle im mobilen Knoten und in der Kommunikations-Verwaltungseinrichtung ein vorbestimmter, maximaler Datendurchsatz (MIT) gespeichert wird. Der vorbestimmte, maximale Datendurchsatz MIT ist wiederum von der verwendeten Zugangstechnologie der Netzwerk-Funkschnittstelle abhängig. Nunmehr wird die Kommunikationsverbindung in Abhängigkeit von der Datendifferenz, der mittleren Übertragungsverzögerung und/oder der maximalen Datendurchsätze ausgewählt, um das wenigstens eine Datenpaket vom mobilen Knoten zur Kommunikations-Verwaltungseinrichtung oder umgekehrt übertragen zu können.

Beispielsweise kann in Abhängigkeit vom Inhalt des zu übertragenden Datenpaketes die Kommunikationsverbindung ausgewählt werden, die beispielsweise die kleinste mittlere Übertragungsverzögerung und den größten maximalen Datendurchsatz aufweist. Die Entscheidungskriterien zur Auswahl der Kommunikationsverbindung in Abhängigkeit von der Datendifferenz, der mittleren Übertragungsverzögerung und der maximalen Datendurchsätze sind beliebig und können vom Anwender frei gewählt werden.

Um eine optimale Lastverteilung zu erreichen, kann auch die aktuelle verfügbare Last jeder verfügbaren Kommunikationsverbindung berücksichtigt werden, die bei einer Datenübertragung in Richtung vom mobilen Knoten zur Kommunikations-Verwaltungseinrichtung gemäß der Gleichung $L_n = (MIT - T_{s,k}n)/MIT$ und bei einer Datenübertragung in Richtung von der Kommunikations-Verwaltungseinrichtung zum mobilen Knoten gemäß der Gleichung $L_n = (MIT - T_{s,v}n)/MIT$ berechnet werden kann. Der Wert MIT entspricht dem maximalen Datendurchsatz der jeweiligen Netz-Schnittstelle, $T_{s,k}n$ der pro Zeiteinheit vom mobilen Knoten über die jeweilige Kommunikationsverbindung gesendeten Datenmenge und $T_{s,v}n$ der pro Zeiteinheit von der Kommunikations-Verwaltungseinrichtung über die jeweilige Kommunikationsverbindung gesendeten Datenmenge.

Um das wenigstens eine Datenpaket vom mobilen Knoten zur Kommunikations-Verwaltungseinrichtung oder umgekehrt übertragen zu können, wird die Kommunikationsverbindung mit der größten aktuellen verfügbaren Last ausgewählt, wenn mehrere Kommunikationsverbindungen die gleiche Datendifferenz, die gleiche mittlere Übertragungsverzögerung und/oder den gleichen maximalen Datendurchsatz aufweisen.

Alternativ kann bei der Lastverteilung auch die minimale Überlastung berücksichtigt werden, die gemäß der Gleichung $mO = dT_{u,n}/MIT$ bzw. $mO = dT_{d,n}/MIT$ berechnet werden kann, wobei MIT der maximale Datendurchsatz der der jeweiligen Kommunikationsverbindung zugeordnete Netz-Funkschnittstelle ist.

Alternativ oder zusätzlich kann zu der vorab festgelegten, von der Zugangstechnologie abhängigen, mittleren Übertragungsverzögerung auch die aktuelle Übertragungsverzögerung zu vorbestimmten Zeitpunkten gemessen werden, wobei die Kommunikationsverbindung zur Übertragung des wenigstens einen Datenpakets vom mobilen Knoten zur Kommunikations-Verwaltungseinrichtung oder in umgekehrter Richtung in Abhängigkeit von der gemessenen aktuellen Übertragungsverzögerung ausgewählt wird.

Vorzugsweise wird die Kommunikationsverbindung ausgewählt, die die kleinste gemessene aktuelle Übertragungsverzögerung aufweist.

Angemerkt sei an dieser Stelle, dass sowohl die aktuelle Übertragungsverzögerung als auch die Datendifferenzen auch dann ermittelt werden können, wenn keine aktuellen Nutzdaten zwischen dem mobilen Knoten und der Kommunikations-Verwaltungseinrichtung übertragen werden. In diesem Fall werden entsprechende Testpakete oder Standardpakete erzeugt und während vorbestimmter Zeitintervalle ausgetauscht.

In einem üblichen Anwendungsfall liefert der mobile Knoten die zu übertragenden Datenpakete nicht selbst, sondern erhält sie zuvor von einem mit einem internen Kommunikationsnetz verbundenen internen Teilnehmer. In diesem Fall werden die für einen IP-Teilnehmer, der mit dem öffentlichen IP-Netz verbunden ist, bestimmten Daten von wenigstens einem mit dem internen Kommunikationsnetz verbundenen internen Teilnehmer zum mobilen Knoten übertragen, wobei die für den internen Teilnehmer bestimmte Daten über den mobilen Knoten und das interne Kommunikationsnetz zum internen Zielteilnehmer weitergeleitet werden können.

Das obengenannte technische Problem wird ebenfalls durch ein Kommunikationssystem zur unterbrechungsfreien Datenübertragung zwischen einem mobilen Knoten und wenigstens einem IP-Teilnehmer, der mit einem öffentlichen IP-Netz verbunden ist, gelöst.

Das Kommunikationssystem weist wenigstens einen mobilen Knoten auf, der mehrere Netzfunkschnittstellen, einen Lastverteilungsrouter und eine Steuereinrichtung aufweist. Hauptaufgabe des Lastverteilungsrouters ist es, zu übertragende Datenpakete auf verfügbare Kommunikationsverbindungen, d. h. auswählbare Netzwerk-Funkschnittstellen zu verteilen.

Weiterhin ist wenigstens ein Zugangsnetz mit mehreren Anbindungspunkten zur drahtlosen Kommunikation mit wenigstens einigen der Netzwerk-Funkschnittstellen des mobilen Knotens vorgesehen, wobei das Zugangsnetz zum Zuordnen von IP-Adressen zu den Netzwerk-Funkschnittstellen ausgebildet ist. In an sich bekannter Weise kann das Zugangsnetz in mehrere IP-Bereiche unterteilt sein. Das wenigstens eine Zugangsnetz ist mit einem öffentlichen IP-Netz verbunden, mit welchem wenigstens ein IP-Teilnehmer verbunden ist.

Wenigstens eine Kommunikations-Verwaltungseinrichtung ist mit dem öffentlichen IP-Netz verbunden. Die Kommunikations-Verwaltungseinrichtung ermöglicht es beispielsweise, dass eine bestehende Datenübertragung zwischen dem mobilen Knoten und einem am IP-Netz angeschlossenen IP-Teilnehmer auch dann fortgesetzt werden kann, wenn die der jeweiligen Netzwerk-Funkschnittstelle zugeordneten IP-Adresse sich infolge der Bewegung des mobilen Knotens verändert oder die über eine Netzwerk-Funkschnittstelle aufgebaute Kommunikationsverbindung ausgefallen ist.

Die Steuereinrichtung des mobilen Knotens ist zum Aufbauen einer Kommunikationsverbindung zwischen jeder Netzwerk-Funkschnittstelle, der eine IP-Adresse zugeordnet worden ist, und der wenigstens einen Kommunikations-Verwaltungseinrichtung ausgebildet. Weiterhin weist der mobile Knoten eine Einrichtung zum Ermitteln der Verbindungsqualität jeder aufgebauten Kommunikationsverbindung auf. Parameter der Verbindungsqualität einer aufgebauten Kommunikationsverbindung sind beispielsweise die Übertragungsverzögerung, auch Round Trip Time genannt, und der Datendurchsatz. Der Lastverteilungsrouter wählt für jedes zu übertragende Datenpaket oder für eine Gruppe von Datenpaketen eine Kommunikationsverbindung in Abhängigkeit von den ermittelten Verbindungsqualitäten aus. An dieser Stelle sei angemerkt, dass unter einer Gruppe von Datenpaketen Pakete verstanden werden können, die zu einer Sitzung gehören. Die Kommunikations-Verwaltungseinrichtung ist zum Empfangen von über wenigstens eine Kommunikationsverbindung übertragenen Datenpaketen und zum Weiterleiten der empfangenen Datenpakete über das öffentliche IP-Netz zu wenigstens einem bestimmten IP-Teilnehmer ausgebildet.

In vorteilhafter Weise ordnet der mobile Knoten jeder aufgebauten Kommunikationsverbindung eine logische Adresse zu. Der mobile Knoten weist einen Speicher auf, in dem die logische Adresse jeder Kommunikationsverbindung und eine der Kommunikations-Verwaltungseinrichtung zugeordnete IP-Adresse gespeichert sind. Auch die Kommunikations-Verwaltungseinrichtung weist einen Speicher auf, in den die logische Adresse jeder Kommunikationsverbindung und die IP-Adresse der Netzwerk-Funkschnittstellen gespeichert sind. Auf diese Weise wird sichergestellt, dass eine bestehende Datenübertragung zwischen dem mobilen Knoten und einem IP-Teilnehmer auch dann fortgesetzt werden kann, wenn sich die IP-Adresse einer Netzwerk-Funkschnittstelle ändert.

Damit auch der Datenverkehr zum mobilen Knoten effizient gestaltet werden kann, weist die Kommunikations-Verwaltungseinrichtung einen Speicher zum Speichern der ermittelten Verbindungsqualitäten und einen Lastverteilungsrouter auf, der für jedes Datenpaket oder für eine Gruppe von Datenpaketen, die zum mobilen Knoten übertragen werden sollen, eine Kommunikationsverbindung in Abhängigkeit von den ermittelten Verbindungsqualitäten auswählt. Die Kommunikations-Verwaltungseinrichtung ist zum Empfangen von über das öffentliche IP-Netz übertragenen Datenpaketen und zum Weiterleiten der empfangenen Datenpakete über die ausgewählte Kommunikationsverbindung zum mobilen Knoten ausgebildet. Der mobile Knoten und/oder die Kommunikations-Verwaltungseinrichtung verwenden geeignete

**EP 2 028 895 B1**

Routingtabellen zur Weiterleitung von Datenpaketen.

In vorteilhafter Weise ist das wenigstens eine Zugangsnetz zum Ändern der den Netz-Funkschnittstellen zugewiesenen IP-Adressen ausgebildet. Bei dem Zugangsnetz kann es sich um ein Mobilfunknetz gemäß dem GMS- oder UMTS-Standard handeln. Die im mobilen Knoten verwendeten Netz-Funkschnittstellen müssen demzufolge ebenfalls dem GMS- oder UMTS-Standard genügen.

Die Steuereinrichtung des mobilen Knotens ist zum Aufbauen einer Kommunikationsverbindung hinsichtlich der Netzwerk-Funkschnittstelle, deren IP-Adresse geändert worden ist, ausgebildet, wobei der mobile Knoten die geänderte IP-Adresse der Kommunikations-Verwaltungseinrichtung mitteilt. Um die Lastverteilung zu übertragender Datenpakete effizient zu gestalten, weist der mobile Knoten eine Einrichtung zum Zählen der pro Zeiteinheit über jede aufgebaute Kommunikationsverbindung gesendeten Datenmengen und die Kommunikations-Verwaltungseinrichtung eine Einrichtung zum Zählen der pro Zeiteinheit über jede aufgebaute Kommunikationsverbindung empfangenen Datenmenge auf. Weiterhin weist der mobile Knoten eine Einrichtung zum Bilden der Datendifferenz für jede Kommunikationsverbindung auf. Der Lastverteilungsrouter des mobilen Knotens wählt dann zur Übertragung wenigstens eines Datenpakets zur Kommunikations-Verwaltungseinrichtung die Kommunikationsverbindung mit der kleinsten Datendifferenz aus.

Um auch eine effiziente Lastverteilung bei der Datenübertragung zum mobilen Knoten zu ermöglichen, weist die Kommunikations-Verwaltungseinrichtung eine Einrichtung zum Zählen der pro Zeiteinheit über jede aufgebaute Kommunikationsverbindung gesendeten Datenmenge und der mobile Knoten eine Einrichtung zum Zählen der pro Zeiteinheit über die jeweilige Kommunikationsverbindung empfangenen Datenmenge auf. Die Kommunikations-Verwaltungseinrichtung kann zum Bilden der Datendifferenz für jede Kommunikationsverbindung ausgebildet sein. Der Lastverteilungsrouter der Kommunikations-Verwaltungseinrichtung wählt dann zur Übertragung des wenigstens einen Datenpakets zum mobilen Knoten die Kommunikationsverbindung mit der kleinsten Datendifferenz aus.

In vorteilhafter Weise weisen der mobile Knoten und die Kommunikationsverwaltungseinrichtung jeweils einen Speicher zum Ablegen einer mittleren Übertragungsverzögerung (Round Trip Time) für jede Netzwerk-Funkschnittstelle auf. Der Lastverteilungsrouter des mobilen Knotens und/oder der Kommunikations-Verwaltungseinrichtung können dann zur Übertragung wenigstens eines Datenpakets die Kommunikationsverbindung in Abhängigkeit der Datendifferenz und/oder der mittleren Übertragungsverzögerung auswählen.

Vorzugsweise wählt der Lastverteilungsrouter des mobilen Knotens und/oder der Kommunikations-Verwaltungseinrichtung die Kommunikationsverbindung mit der kleinsten Übertragungsverzögerung aus, wenn mehrere Kommunikationsverbindungen mit der gleichen Datendifferenz verfügbar sind.

Um die Lastverteilung verbessern zu können, ist für jede Netzwerk-Funkschnittstelle im mobilen Knoten und in der Kommunikations-Verwaltungseinrichtung ein vorbestimmter, maximaler Datendurchsatz gespeichert. Der Lastverteilungsrouter des mobilen Knotens und/oder der Kommunikations-Verwaltungseinrichtung wählt dann eine Kommunikationsverbindung in Abhängigkeit von der Datendifferenz, der mittleren Übertragungsverzögerung und/oder der maximalen Datendurchsätze aus. Die Gewichtung der jeweiligen Parameter ist unter anderem dem Netzbetreiber überlassen.

Der Lastverteilungsrouter des mobilen Knotens kann für jede aufgebaute Kommunikationsverbindung die aktuelle verfügbare Last in Richtung zur Kommunikations-Verwaltungseinrichtung gemäß der Gleichung $L_n = (MIT-T_{s,k}n)/MIT$ und der Lastverteilungsrouter der Kommunikations-Verwaltungseinrichtung kann für jede aufgebaute Kommunikationsverbindung die aktuelle verfügbare Last in Richtung zum mobilen Knoten gemäß der Gleichung $L_n = (MIT-T_{s,v}n)/MIT$ berechnen. Der Lastverteilungsrouter des mobilen Knotens und/oder der Kommunikations-Verwaltungseinrichtung wählt dann die Kommunikationsverbindung mit der größten aktuellen verfügbaren Last aus, wenn mehrere Kommunikationsverbindungen die gleiche Datendifferenz, die gleiche mittlere Übertragungszeit und/oder den gleichen maximalen Datendurchsatz aufweisen.

Alternativ oder zusätzlich kann der Lastverteilungsrouter des mobilen Knotens und/oder der Kommunikations-Verwaltungseinrichtung die Kommunikationsverbindung mit der minimalen Überlastung auswählen, die gemäß der Gleichung $mO = dT_{u,n}/MIT$ bzw. $mO = dT_{d,n}/MIT$ berechnet wird.

Um die Lastverteilung weiterhin optimieren zu können, weist das Kommunikationssystem eine Einrichtung zum Messen der aktuellen Übertragungsverzögerung zu vorbestimmten Zeitpunkten auf. Der Lastverteilungsrouter des mobilen Knotens und/oder der Kommunikations-Verwaltungseinrichtung wählt dann zur Datenübertragung eine Kommunikationsverbindung in Abhängigkeit von der gemessenen aktuellen Übertragungsverzögerung aus.

Bei einer bevorzugten Ausführungsform ist der mobile Knoten mit einem internen Kommunikationsnetz, an welchem mehrere interne Teilnehmer angeschlossen sein können, verbunden. Vorzugsweise ist der mobile Knoten und das interne Kommunikationsnetz in einem Fahrzeug, beispielsweise einem Zug, einem Bus oder einem Flugzeug, implementiert.

Das obengenannte technische Problem wird ebenfalls durch einen mobilen Knoten oder eine Kommunikations-Verwaltungsvorrichtung gelöst, die zum Einsatz in einem Kommunikationssystem nach einem der Ansprüche 17 bis 30 ausgebildet sind.

6

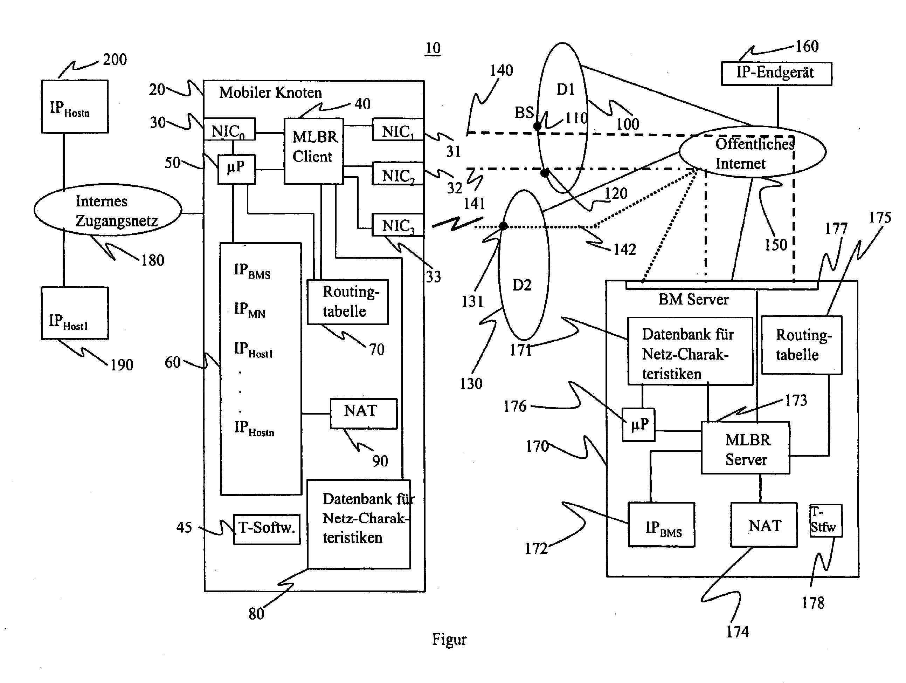

Die einzige Figur zeigt ein beispielhaftes Kommunikationssystem 10 zur unterbrechungsfreien Datenübertragung zwischen wenigstens einem mobilen Knoten und wenigstens einem IP-Teilnehmer. Das Kommunikationssystem 10 weist beispielsweise einen mobilen Knoten 20 auf, der über eine Netzwerk-Schnittstelle 30 an einem internen Zugangsnetz 180 angebunden ist. Mit dem internen Zugangsnetz 180 sind beispielsweise zwei IP-Teilnehmer 190 und 200 verbunden. Der mobile Knoten 20 und das interne Zugangsnetz 180 sind beispielsweise in einem Hochgeschwindigkeitszug implementiert. Bei den Teilnehmern 190 und 200 kann es sich um die Endgeräte von Fahrgästen handeln, die mit einem IP-Teilnehmer 160, welcher an einem öffentlichen IP-Netz 150 angeschlossen ist, kommunizieren möchten. Bei dem öffentlichen IP-Netz 150 handelt es sich vorzugsweise um das Internet.

An dieser Stelle sei bereits angemerkt, dass das Kommunikationssystem 10 in der Praxis mehrere mobile Knoten und mehrere IP-Teilnehmer umfassen kann. Um Daten mit dem IP-Endgerät 160 austauschen zu können, weist der mobile Knoten 20 beispielsweise drei Netzwerkschnittstellenkarten 31, 32 und 33 auf, die als Netzwerk-Funkschnittstellen $NIC_1$, $NIC_2$ und $NIC_3$ dargestellt sind. Die Netzwerkschnittstellenkarten 31 und 32 weisen eine Zugangstechnologie auf, mit der sie über ein erstes Zugangsnetz 100 kommunizieren können. Das Zugangsnetz 100 ist beispielsweise ein GSM-Mobilfunknetz. Lediglich der einfachen Darstellung wegen sind nur zwei Basisstationen 110 und 120 als Anbindungspunkte des Zugangsnetzes 100 dargestellt. Die Netzwerkschnittstellenkarte 33 des mobilen Knotens 20 ist zur Kommunikation mit einem zweiten Zugangsnetz 130 ausgebildet, das beispielsweise den UMTS-Standard unterstützt. Lediglich der einfachen Darstellung wegen ist nur eine Basisstation 131 des zweiten Zugangsnetzes 130 dargestellt. Die Zugangsnetze 100 und 130 sind über Leitungen mit dem öffentlichen Internet 150 verbunden.

Eine Kommunikations-Verwaltungseinrichtung 170, auch als Bonding Mobility Server, kurz BM-Server bezeichnet, ist mit dem Internet 150 verbunden. Um eine effiziente Lastverteilung bei der Übertragung von Datenpaketen zum IP-Endgerät 160 ermöglichen zu können, weist der mobile Knoten 20 einen Lastverteilungsrouter 40 auf, der auch als MLBR (Mobile Load Balancing Router) bezeichnet wird. Der Lastverteilungsrouter 40 ist im vorliegenden Beispiel als Client ausgebildet. Die genaue Funktionsweise des Lastverteilungsrouters 40 wird weiter unten noch näher ausgeführt. Der Lastverteilungsrouter 40 ist mit einem Speicher 70 verbunden, in dem eine Routingtabelle abgelegt ist. Die Routingtabelle legt beispielsweise fest, über welche Netzwerkschnittstellenkarten 31, 32 und 33 die Datenpakete einer Sitzung übertragen werden. Dem mobilen Knoten 20 ist eine IP-Adresse $IP_{MN}$ zugeordnet, während dem BM-Server 170 eine IP-Adresse $IP_{BMS1}$ zugeordnet ist, über die er Daten vom mobilen Knoten empfangen und zum mobilen Knoten 20 senden kann. Die IP-Adresse des mobilen Knotens 20, des BM-Servers 170 und beispielsweise die privaten IP-Adressen der internen Teilnehmer 200 und 190 können in einem weiteren Speicher 60 oder dem Speicher 70 abgelegt sein. Ein weiterer Speicher 80 ist im mobilen Knoten 20 vorgesehen, in dem Netzcharakteristiken hinterlegt sind, welche die physikalischen Eigenschaften der Netzwerkschnittstellenkarten 31, 32 und 33 und die Kanalqualität der darüber aufgebauten Kommunikationsverbindungen enthalten. Eine Netzwerkadressen-Umsetzungseinrichtung 90, auch Network Address Translation (NAT) genannt, ist im mobilen Knoten 30 implementiert, um private IP-Adressen der internen Teilnehmer 190 und 200 entsprechend umsetzen zu können. Die Überwachung und Steuerung des mobilen Knotens übernimmt ein Mikroprozessor 50.

Damit auch der Datenverkehr zum mobilen Knoten 20 optimiert werden kann, weist der BM-Server 170 ebenfalls einen Lastverteilungsrouter 173 auf, der als Server implementiert ist. Im BM-Server 170 ist ein Speicher 175 vorgesehen, in dem eine Routingtabelle hinterlegt ist. Eine Datenbank ist in einem Speicher 171 abgespeichert, die Parameter der Verbindungsqualität der jeweiligen Kommunikationsverbindungen enthält. Eine Schnittstelleneinrichtung 177 ist vorgesehen, um Daten über Internet 150 empfangen und ins Internet übertragen zu können. Auch der BM-Server 170 weist einen Mikroprozessor 176 auf, der den ordnungsgemäßen Betrieb des BM-Servers überwacht und steuert. Um private IP-Adressen der internen Teilnehmer 190 und 200 verwalten zu können, kann auch der BM-Server 170 eine Netzwerkadressen-Umsetzungseinrichtung 174 aufweisen. Ein Speicher 172 ist vorgesehen, in dem die IP-Adresse $IP_{BMS1}$ und eine weitere IP-Adresse $IP_{BMS2}$ des BM-Servers hinterlegt ist, die auch dem IP-Endgerät 160 bekannt sein kann. Die IP-Adresse $IP_{BMS2}$ wird benötigt, um Datenpakete vom BM-Server 170 zum IP-Endgerät 160 und in umgekehrter Richtung übertragen zu können. Die IP-Adresse $IP_{BMS2}$ und die IP-Adresse $IP_{BMS1}$ können auch identisch sein, da sie zur selben Netzwerkschnittstelle des BM-Servers 170 gehören können.

Die Funktionsweise des in der Figur gezeigten Kommunikationssystems wird nachfolgend detailliert geschildert.

Nachfolgend wird eine Kommunikation zwischen dem, einem Fahrgast zugeordneten internen IP-Gerät 200 und dem am Internet 150 angeschlossenen IP-Endgerät 160 beschrieben. Der mobile Knoten 20, das interne Zugangsnetz 180 und die internen IP-Geräte 190 und 200 befinden sich in einem sich bewegenden Fahrzeug. Der BM-Server 170 wird in diesem Fall vom mobilen Knoten 20 verwendet, um mit dem IP-Endgerät 160 zu kommunizieren. In umgekehrter Richtung wird der BM-Server 170 vom IP-Endgerät 160 verwendet, um Daten zum mobilen Knoten und schließlich zum internen IP-Gerät 200 zu übertragen. Transporttunnel (IP-in-IP Tunnel, IP-in-UDP Tunnel, wie zum Beispiel Open-VPN) können zu diesem Zweck zwischen dem mobilen Knoten 20 und dem BM-Server 170 verwendet werden.

Zunächst wird jedoch erläutert, wie Kommunikationsverbindungen zwischen dem mobilen Knoten 20 und dem BM-Server 170 aufgebaut und Netzwerk-Schnittstellenkarten zur effizienten Übertragung von Datenpaketen vom und zum mobilen Knoten 20 ausgewählt werden können.

Angenommen sei, dass jede Netzwerk-Funkschnittstelle des mobilen Knotens 20, das sind im vorliegenden Beispiel die Netzwerk-Schnittstellenkarten 31, 32 und 33 eingeschaltet sind und dass eine Konnektivität sowohl zu den Basisstationen 110 und 120 des Zugangsnetzes 100 als auch zu der Basisstation 131 des Zugangsnetzes 130 besteht. Weiterhin sei angenommen, dass beide Zugangsnetze in der Lage sind dem mobilen Knoten 20 IP-Adressen für die jeweiligen Netzwerk-Schnittstellenkarten (NIC) zuzuweisen. Zum betrachteten Zeitpunkt bestehe eine Konnektivität zwischen der Netzwerk-Schnittstellenkarte 31 und der Basisstation 110, der Netzwerk-Schnittstellenkarte 32 und der Basisstation 120 sowie der Netzwerk-Schnittstellenkarte 33 und der Basisstation 131. Die drei Basisstationen gehören im vorliegenden Beispiel verschiedenen IP-Domänen an. Weiterhin sei angenommen, dass die Netzwerk-Schnittstellenkarten 110 und 120 über eine GSM-Zugangstechnologie verfügen, während die Netzwerk-Schnittstellenkarte 33 über eine UMTS-Zugangstechnologie verfügt. Das Zugangsnetz 100 hat der Netzwerk-Schnittstellenkarte 31 die IP-Adresse IP1 und der Netzwerk-Schnittstellenkarte 32 die IP-Adresse IP2 zugeordnet, wohingegen das Zugangsnetz 130 der Netzwerk-Schnittstellenkarte 33 die IP-Adresse IP3 zugeordnet hat. Diese IP-Adressen können im Speicher 60 und/oder im Speicher 70 abgelegt werden. Wenn der mobile Knoten 20 sich in den Versorgungsbereich anderer Basisstation bewegt, kann es passieren, dass die aktuellen IP-Adressen einer oder mehrerer der Netzwerk-Schnittstellenkarten ($NIC_1$, $NIC_2$, $NIC_3$) geändert werden müssen. Eine Änderung der IP-Adressen wird notwendig, wenn zum Beispiel die Konnektivität der Netzwerk-Schnittstellenkarte 31 zur Basisstaion 110 verloren geht und eine neue Konnektivität zur Basisstation 120 besteht. Da beide Basisstationen 110 und 120 unterschiedlichen IP-Domänen angehören, muss der Netzwerk-Schnittstellenkarte 31 eine neue IP-Adresse zugeordnet werden. Die geänderte IP-Adresse wird im Speicher 60 und/oder Speicher 70 abgelegt.

Wie nachfolgend noch erläutert wird, ermöglicht das Kommunikationsnetz 10 auch in einem solchen Fall eine unterbrechungsfreie Kommunikation vom und zum mobilen Knoten 20.

Unter Steuerung des Mikroprozessors 50 baut der mobile Knoten 20 über die Netzwerk-Schnittstellenkarten 31, 32 und 33 jeweils eine Kommunikationsverbindung, nachfolgend Tunnel oder Transporttunnel genannt, zum BM-Server 170 unter Verwendung der IP-Adressen IP1, IP2, IP3 und der IP-Adresse $IP_{BMS1}$ auf. Hierzu bedient sich der Mikroprozessor 50 einer Tunnelsoftware, die in einem Speicher 45 abgelegt sein kann. Alternativ kann jeder Tunnel mittels einer separaten Tunnelsoftware verwaltet werden. Auf dem BM-Server 170 wird ebenfalls eine Tunnelsoftware verwendet, die beispielsweise in einem Speicher 178 abgelegt ist. Die IP-Adresse $IP_{BMS1}$ des BM-Servers 170 ist vorzugsweise konstant. Die IP-Adressen IP1, IP2, IP3 und, wenn mehrere mobile Knoten dem BM-Server 170 zugeordnet sind, die IP-Adresse $IP_{MN}$ oder ein Zertifikat des mobilen Knotens 20 werden im Speicher 172 des BM-Servers 170 abgelegt. Die IP-Adresse des mobilen Knotens 20 oder dessen Zertifikat werden vom BM-Server 170 verwendet, um verschiedene mobile Knoten 20 unterscheiden und interne Routing-Tabellen einstellen zu können. Die jeweiligen Kommunikationsverbindungen sind in der Figur mit unterbrochenen Linien dargestellt, die mit 140, 141 bzw. 142 bezeichnet sind. Der Endpunkt jedes Tunnels 140, 141 und 142 stellt eine virtuelle Netzwerkschnittstelle dar. Die virtuelle Netzwerkschnittstelle auf Seite des BM-Servers 170 ist symbolisch in der Figur dargestellt und mit 177 bezeichnet. Jedem Tunnel wird vorzugsweise während des Tunnelaufbaus eine IP-Adresse, nachfolgend auch logische Adresse genannt, zugeordnet. Die logischen Adressen können manuell von einem Systemadministrator vergeben werden. Die logischen Adressen werden dann zum BM-Server 170 übertragen und dort im Speicher 172 abgelegt. Mit Hilfe der logischen Adressen werden später Routing-Tabellen zur effizienten Lastverteilung sowohl im mobilen Knoten 20 als auch im BM-Server 170 erstellt und im Speicher 70 bzw. 175 abgelegt.

In der Routingtabelle des Speichers 70 des mobilen Knoten 20 ist standardmäßig für abgehende Datenpakete einer Sitzung eine Netzwerk-Schnittstellenkarte oder ein Tunnel definiert. Daher kann nur ein Tunnel vom mobilen Knoten 20 genutzt werden, um Datenpakete einer Sitzung zum BM-Server 170 zu übertragen. In der gleichen Weise kann vom BM-Server 170 nur ein Tunnel verwendet werden, um Datenpakete einer Sitzung zum mobilen Knoten 20 zu übertragen. Diese Tunnel müssen nicht die gleichen sein. Beispielweise kann der mobile Knoten 20 den Tunnel 140 über die Netzwerk-Schnittstellenkarte 31 verwenden um Datenpakete einer Sitzung zum BM-Server 170 und dann zum IP-Engerät 160 zu übertragen, während der BM-Server 170 Datenpakete einer Sitzung über den der Netzwerkschnitstellenkarte 32 zugeordneten Tunnel 141 zum mobilen Knoten 20 übertragen kann.

Über den Aufbau der Kommunikationsverbindungen 140, 141 und 142 werden auch der Lastverteilungsrouter 40 des mobilen Knotens 20 und der Lastverteilungsrouter 173 des BM-Servers 170 informiert. Für jede verfügbare Netzwerk-Schnittstellenkarte 31, 32 und 33 kann in der Datenbank 80 der dazugehörende maximale Schnittstellendurchsatz (MIT = Maximal Interface Throughput) und die durchschnittliche Übertragungs- oder Umlaufsverzögerung (ARTT = Average Round Trip Time) gespeichert werden. Die MIT- und ARTT- Werte hängen von der Art der Zugangstechnologie, die von der jeweiligen Netzwerk-Schnittstellenkarte genutzt wird, ab. Diese Informationen werden über die aufgebauten Tunnel auch zum BM-Server 170 übertragen und beispielsweise im Speicher 171 abgelegt. In der Praxis werden diese Informationen vorteilhafter Weise vom Systemadministrator manuell im mobilen Knoten 20 und dem BM-Server 170 konfiguriert. Tabelle 1 zeigt die Informationen, die in der Datenbank 80 und dem Speicher 171 abgelegt sind.

Tabelle 1

| Identifier | MIT | ARTT |
|---|---|---|
| tun140 | MIT1 | ARTT1 |
| tun141 | MIT2 | ARTT2 |
| tun142 | MIT3 | ARTT3 |

Wie später noch erläutert wird, können diese Information von den Lastverteilungsroutern 40 und 173 verwendet werden, um entweder einzelne Datenpakete oder Datenpakete einer oder mehrerer Datensitzungen auf die verfügbaren Netzwerkschnittstellen 31 bis 33 zu verteilen. Da die anfänglichen Tunneleinstellungen auf beiden Seiten manuell konfiguriert werden (z. B. der Name des jeweiligen Tunnels), können die Identifizierer der Tunnel auf beiden Lastverteilungsroutern 40 und 173, die auf dem mobilen Knoten 20 bzw. dem BM-Server 170 installiert sind, auf den gleichen Wert gesetzt werden.

Bevor Datenpakete über einen Tunnel vom mobilen Knoten 20 zum BM-Server 170 und umgekehrt übertragen werden können, muss festgelegt werden, welche Netzwerk-Schnittstellenkarten zur Datenübertragung benutzt werden. Hierzu kann der Zustand, z. B. Signalpegel oder das Signalzu-Rausch-Verhältnis, und insbesondere die Qualität (Durchsatz, Umlaufverzögerung) jedes Tunnels, d. h. insbesondere des entsprechenden drahtlosen Übertragungsabschnitts zwischen der jeweiligen Netzwerk-Schnittstellenkarte und der jeweiligen Bassisstation festgestellt werden, um festzulegen, welche Netzwerkschnittstelle für die Datenübertragung verwendet werden soll. Wenn mehr als ein Tunnel für die Datenübertragung verfügbar ist, können Lastverteilungsmechanismen angewendet werden, um die Ressourcen jedes Tunnels zu bündeln und den für den mobilen Knoten 20 verfügbaren Gesamtdurchsatz zu erhöhen.

Diese Aufgabe übernehmen die Lastverteilungsrouter 40 und 173 (MLBR = Mobile Load Balancing Router), die eine virtuelle Netzwerkschnittstelle darstellen, die auf dem mobilen Knoten 20 bzw. auf dem BM-Server 170 implementiert sind. Die Lastverteilungsrouter 40 und 170 sind in der Lage, durch Verteilung der Last auf die verfügbaren Kommunikationsverbindungen 140, 141 und 142 zwischen dem mobilen Knoten 20 und dem BM-Server 170 die Ressourcen aller Netzwerkschnittstellen, die auf dem mobilen Knoten 20 installiert sind, auszunutzen. Um die Verkehrslast unter den verfügbaren Netzwerkschnittstellen optimal zu verteilen, können die Lastverteilungsrouter 40 und 173 derart ausgebildet sein, dass mehrere Datenpakete, d.h. mehr Last über den Tunnel übertragen wird, der die beste Qualität und den höchsten verfügbare Datendurchsatz hat. Zusätzlich können die Lastverteilungsrouter 40 und 173 eine Priorisierung von zu übertragenden Datenpaketen eines spezifischen Typs oder von Datenpaketen, die für einen speziellen Nutzer oder eine spezielle Anwendung bestimmt sind, durchführen.

Drei Verfahren, die für die Lastverteilung zwischen verfügbaren Tunneln angewendet werden können, werden von den Lastverteilungsrouter 40 und 170 ausgeführt: eine Paket-basierte und/oder Sitzungs-basierte Lastverteilung. Paket-basierte Lastverteilung bedeutet, dass der Tunnel, über den Datenpakete übertragen werden sollen, für jedes Paket unabhängig von seinem Inhalt ausgewählt wird. Sitzungs-basierte Lastverteilung bedeutet, dass der Paketinhalt analysiert wird, um einzuordnen, zu welcher Datensitzung das Paket gehört. Die Datenpakete einer Datensitzung werden einem Tunnel zugeordnet, wobei die Tunnelzuordnung vor der Übertragung des ersten Pakets der Sitzung erfolgt. Alle weiteren Pakete, die zur gleichen Datensitzung gehören, werden über denselben Tunnel übertragen, solange dieser verfügbar ist.

Wie bereits erwähnt, können die physikalischen Parameter der Netzwerk-Schnittstellenkarten, über die die Tunnel etabliert sind, nicht als explizite Indikatoren für die Kanalqualität verwendet werden. Denn es kann vorkommen, dass die physikalischen Parameter wie SNR oder die Empfangsleistung hervorragend sind, innerhalb der Tunnel jedoch keine Datenübertragung möglich ist. Dies kann der Fall sein wenn ein Tunnel erneut aufgebaut wird. Zudem sind die physikalischen Parameter der Netzwerk-Schnittstellenkarten nur auf dem mobilen Knoten 20 verfügbar.

Um die Qualität der aufgebauten Tunnel und deren Last zu ermitteln, kann ein Vergleich des in jedem Tunnel übertragenen und empfangenen Durchsatzes durchgeführt werden. Dafür überwacht der Lastverleitungsrouter 40 während einer vorbestimmten Zeiteinheit den durchschnittlichen, über jede Netzwerk-Schnittstellenkarte übertragenen Durchsatz T während einer laufenden Paketübertragung. Die Zeiteinheit kann beliebig gewählt werden. Insbesondere kann die während der Zeiteinheit t vom mobilen Knoten 20 über den jeweiligen Tunnel zum BM-Server 170 übertragene Datenmenge, d. h. der Durchsatz, gezählt werden. Der Durchsatz $T_{s,k}n$ der vom mobilen Knoten gesendeten Daten für einen Tunnel oder eine Netzwerkschnittstelle n kann gemäß der Gleichung 1 gemessen werden.

$$T_{s,k}n = \text{Größe der gesendeten Datenpakete}/t \qquad (1)$$

Die Messergebnisse werden für jeden Tunnel 140, 141 und 142 zum Beispiel in einer Form, wie in der Tabelle 2 gezeigt, in der Datenbank 80 abgelegt und zu vorbestimmten Zeiten aktualisiert.

Tabelle 2

| Identifier | MIT | ARTT | T | $\breve{T}$ |
|---|---|---|---|---|
| tun1 | MIT1 | ARTT1 | T1 | $\breve{T}1$ |
| tun2 | MIT2 | ARTT1 | T2 | $\breve{T}2$ |
| tun3 | MIT3 | ARTT2 | T3 | $\breve{T}3$ |

Die am BM-Server 170 über die Tunnel 140 bis 142 empfangenen Datenpakete werden über die virtuelle Schnittstelle 177 an den Lastverteilungsrouter 173 weitergegeben. Der Lastverteilungsrouter 173 kann somit feststellen, über welchen Tunnel jedes Paket empfangen wurde. Der Lastverteilungsrouter 173 misst für jeden Tunnel n den während der Zeiteinheit t durchschnittlichen empfangenen Durchsatz $\breve{T}_{e,v}n$ auf jeder virtuellen Tunnelschnittstelle gemäß der Gleichung 2:

$$\breve{T}_{e,v}n = \text{Größe der empfangenen Datenpakete}/t \qquad (2)$$

In ähnlicher Weise kann der Lastverteilungsrouter 173 für jeden Tunnel n die während einer Zeiteinheit t zum mobilen Knoten 20 durchschnittliche gesendete Datenmenge $T_{s,v}n$ auf jeder virtuellen Tunnelschnittstelle messen. Der Lastverteilungsrouter 40 wiederum kann die während einer Zeiteinheit t am mobilen Knoten 20 durchschnittlich empfangene Datenmenge $\breve{T}_{e,k}n$ messen.

Das Zeitintervall t, über welches der durchschnittliche Durchsatz gemessen wird, muss für T und $T$ hinsichtlich eines Tunnels das gleiche sein. Die von dem jeweiligen Lastverteilungsrouter gemessenen Durchsätze können zwischen dem mobilen Knoten 20 und dem BM-Server 170 über bestehende Tunnel ausgetauscht werden. Hierzu wird vom jeweiligen Lastverteilungsrouter eine Meldung erzeugt. Zur Datenübertragung kann beispielsweise das User Datagram Protocol (UDP) verwendet werden. Die gemessenen Durchsätze werden dann in einem UDP Datagramm vom mobilen Knoten zum BM-Server, oder umgekehrt, vorzugsweise über den Tunnel gesendet, auf den sich die in der Meldungsnachricht enthaltene Information bezieht.

Der mobile Knoten 20 aktualisiert die in der Datenbank 80 gespeicherten Daten, die in Tabelle 2 gezeigt sind, wenn er den vom Lastverteilungsrouter 173 gemessenen Datendurchsatz $T_{e,v}n$ empfangen hat. In ähnlicher Weise aktualisiert der BM-Server 170 die Daten in der Datenbank 171, wenn er den vom Lastverteilungsrouter 40 gemessenen Datendurchsatz $T_{e,k}n$ empfangen hat.

Wenn keine Datenpakete vom oder zum mobilen Knoten 20 übertragen werden, sind der durchschnittliche übertragene und der durchschnittliche empfangene Durchsatz Null. Demzufolge kann keine Bewertung der Kanalqualität der jeweiligen Tunnel erfolgen. Um dies zu vermeiden, sendet der Lastverteilungsrouter 40 Testmeldungen, sogenannte Request Connection Meldungsnachrichten, über die aufgebauten Tunnel 140, 141 und 142 zum BM-Server 170, welche mit Ping Request ICMP Nachrichten vergleichbar sind. Der Lastverteilungsrouter 173 des BM-Servers 170 empfängt diese Nachrichten und antwortet dem Lastverteilungsrouter 40 des mobilen Knotens 20 mit Connection Reply Nachrichten, die über den Tunnel gesendet werden, von dem die Connection Request Nachrichten empfangen wurden. Zur Übertragung dieser Meldungen kann der UDP-basierten Transportmechanismus verwendet werden. Ein entsprechender Nachrichtenaustausch kann auch in umgekehrter Richtung erfolgen. Die beiden Lastverteilungsrouter können dann in der zuvor beschriebenen Weise den gesendeten und den empfangenen Durchsatz berechnen, indem die gesendeten und empfangenen Meldungenpro Zeiteinheit auf jedem Tunnel gemessen werden.

Es kann vorkommen, dass über die aufgebauten Tunnel Datenpakete nur in eine Richtung übertragen werden können. Zum Beispiel können Datenpakete einer Sitzung über den Tunnel 140 nur vom mobilen Knoten 20 zum BM-Server 170 übertragen werden. Die zu dieser Sitzung gehörenden Anwortinformationen müssen dann über einen anderen Tunnel, zum Beispiel den Tunnel 141 vom BM-Server 170 zum mobilen Knoten 20 übertragen werden. Um die Abgabewahrscheinlichkeit zu erhöhen, kann die Information über den durchschnittlichen empfangenen Durchsatz über alle Tunnel gleichzeitig gesendet werden.

Da sich die mittlere Übertragungsverzögerungen ARTT der verschiedenen Netzwerk-Schnittstellenkarten 31, 32, 33 signifikant unterscheiden können, sollten zu jeder Meldungsnachricht, in denen der gemessene durchschnittliche, empfangene Durchsatz vom BM-Server zum mobilen Knoten oder vom mobilen Knoten zum BM-Server 170 übertragen werden, eine Folgezahl hinzugefügt werden. Dadurch ist sichergestellt, dass die Information über den durchschnittlichen, empfangenen Durchsatz in der Datenbank 80 bzw. in der Datenbank 171 nur auf die neuesten Werte aktualisiert wird und nicht mit veralteten Werten, die von einer Netzwerk-Schnittstellenkarte mit hoher Übertragungserzögerung empfangen werden, überschrieben werden kann. Um zusätzlichen Meldungsoverhead zu eliminieren, können die Informationen über die gemessenen durchschnittlichen empfangenen Durchsätze auch mit den Connection Request und Connection Reply Nachrichten kombiniert werden, die zwischen dem mobilen Knoten 20 und dem BM-Server 170 übertragen werden. Wenn der gemessene empfangene Durchsatz Null ist, kann zur Vermeidung von Overhead auch keine Information zur Gegenseite übertragen werden.

Basierend auf den für jede Netzwerk-Schnittstellenkarte gespeicherten MIT- und/oder ARTT-Werten sowie basierend auf den von den Lastverteilungsroutern 40 und 173 gemessenen Durchsätzen $T_{s,k}n$, $T_{s,v}n$ und $T_{e,v}n$ und $T_{e,k}n$ kann der Lastverteilungsrouter 40 des mobilen Knotens 20 die Netzwerk-Schnittstellenkarte oder den darüber aufgebauten Tunnel auswählen, über den ein Datenpaket im Falle einer Paket-basierten Lastverteilung gesendet wird oder über den Datenpakete einer Sitzung im Falle einer Sitzungs-basierten Ablaufplanung übertragen werden. In ähnlicher Weise kann der Lastverteilungsrouter 173 des BM-Server 170 den Tunnel auswählen, über den ein Datenpaket im Falle einer Paketbasierten Lastverteilung gesendet wird oder Datenpakete einer Sitzung im Falle einer Sitzungs-basierten Ablaufplanung übertragen werden. Hierfür können die Lastverteilungsrouter 40 und 173 die Datenpaketdifferenz zwischen dem durchschnittlichen, übertragenen Durchsatz T und dem durchschnittlichen empfangenen Durchsatz für jeden Tunnel gemäß Gleichung 3a) bzw. 3b) wie folgt berechnen:

$$dt_{u,n} = T_{s,k}n - \breve{T}_{e,v}n \qquad (3a)$$

$$dt_{d,n} = T_{s,v}n - \breve{T}_{e,k}n \qquad (3b)$$

"u" kennzeichnet darin die Uplink-Übertragungsrichtung vom mobilen Knoten zum BM-Server, während "d" die umgekehrte Downlink-Übertragung kennzeichnet. "s" steht für "Senden", "e" für "Empfangen", "k" für "mobiler Knoten" und "v" für "Kommunikations-Verwaltungseinrichtung" oder "BM-Server".

Die Differenz dt kann nicht kleiner als Null sein, da die Menge der empfangenen Daten nicht größer als die Menge der gesendeten Daten sein kann.

Wenn dt positiv ist, bedeutet dies, dass einige Datenpakete verloren gegangen sind oder noch nicht übertragen worden sind. Eine Differenz, die größer als Null ist, weist auf den Grad der Auslastung der Netzwerk-Schnittstellenkarte oder des Tunnels hin, der über diese Netzwerk-Schnittstellenkarte etabliert wurde. Wenn dt=T ist, bedeutet dies, dass keine Pakete auf der gegenüberliegenden Seite empfangen werden können. Die Lastverteilungsrouter 40 und 173 schließen daraus, dass der jeweilige Tunnel nicht mehr zur Verfügung steht. Wenn dt kleiner als T ist, schließen die Lastverteilungsrouter 40 und 173 darauf, dass die Netzwerk-Schnittstellenkarte oder der darüber aufgebaute Tunnel zur weiteren Datenübertragung zur Verfügung steht, obwohl der Tunnel mehr oder weniger überlastet ist. Wenn dt gleich Null ist, bedeutet dies, dass alle in den Tunnel gesendeten Daten auf der anderen Seite erfolgreich empfangen werden können, so dass weitere zusätzliche Daten über diesen Tunnel gesendet werden können.

Angenommen sei, dass die Lastverteilungsrouter 40 und 173 auf die in der Datenbank 80 bzw. 171 gespeicherten Informationen, siehe Tabelle 2, und darüber hinaus auf die gemäß den Gleichungen 3a bzw. 3b berechneten Werte zugreifen können.

Für den Fall, dass zum Beispiel ein separates Datenpaket oder ein Datenpaket einer neuen Sitzung vom mobilen Knoten 20 zum BM-Server 170 übertragen werden soll, filtert der Lastverteilungsrouter 40 zunächst alle Tunnel aus, die eine Differenz dt von Null besitzen. Wenn nur ein solcher Tunnel existiert, wird dieser Tunnel zur Übertragung des separaten Datenpakets oder zur Übertragung der Datenpakete der neuen Sitzung ausgewählt. Wenn es mehrere Tunnel mit dt=0 gibt, wird zum Beispiel die Netzwerk-Schnittstellenkarte oder der dieser Karte zugeordnete Tunnel mit dem minimalen ARTT-Wert ausgewählt. Wenn mehr als eine Netzwerk-Schnittstellenkarte mit dem gleichen ARTT-Wert verfügbar ist, berechnet der Lastverteilungsrouter 40 die aktuelle, verfügbare Kanallast für jeden Tunnel gemäß Gleichung 4 wie folgt:

$$L = (MIT - T)/MIT \qquad (4)$$

Für jeden aufgebauten Tunnel sind der MIT-Wert und die gesendete Datenmenge pro Zeiteinheit T in der Datenbank 80 des mobilen Knotens 40 hinterlegt. Es wird dann die Netzwerk-Schnittstellenkarte oder der über diese Schnittstellenkarte aufgebaute Tunnel mit maximalem L ausgewählt, über den das separate Datenpaket oder das erste Pakete der neuen Sitzung und deren Folgepakete übertragen werden.

Wenn zum Beispiel nur Tunnel mit positivem dt verfügbar sind, bedeutet dies, dass das Kommunikationssystem 10 mehr oder weniger stark ausgelastet ist. In diesem Fall kann der Tunnel mit minimaler Überlastung mO vom Lastverteilungsrouter 40 für das separate Datenpaket oder die Pakete der neuen Sitzung ausgewählt werden, indem er für jeden Tunnel die minimale Überlastung mO gemäß der Gleichung 5 wie folgt berechnet

$$mO = dt/MIT \qquad (5)$$

und den Tunnel mit dem kleinsten mO-Wert auswählt.

Vom Lastverteilungsrouter 40 können weitere berechnete Parameter berücksichtigt werden. Zum Beispiel kann unter Verwendung von Connection Request und Reply Nachrichten die aktuelle Umlaufzeit (CRTT = Current Round Trip Time) gemessen werden. Dann kann auch die CRTT für die Auswahl des geeigneten Tunnels einbezogen werden. Weiterhin ist denkbar, Datenpakete entsprechend ihres Inhalts oder vorbestimmte interne Geräte, zum Beispiel das interne Gerät 190 zu priorisieren. In diesem Fall kann der Lastverteilungsrouter 40 dafür sorgen, dass diesen Paketen immer der Tunnel mit der kürzesten mittleren Übertragungsverzögerung, dem größten mittleren Durchsatz MIT und der kürzesten aktuellen Übertragungsverzögerung zugeordnet wird. Angemerkt sei an dieser Stelle, dass die vom mobilen Knoten 20 zu übertragenden Datenpakete entweder von ihm selbst bereitgestellt oder ihm von einem der internen Geräte 190 und 200 zugeführt werden. Wenn Datenpakete über das interne Zugangsnetz 180 zur Netzwerkschnittstelle 30 übertragen werden, prüft der Mikroprozessor 50 unter Verwendung einer Systemroutingtabelle und der im empfangenen Datenpaket enthaltenen Zieladresse den weiteren Weg des Pakets. Die Systemroutingtabelle ist im mobilen Knoten 20 und im BM-Server 170 gespeichert. Die Systemroutingtabelle enthält unter Anderem Angaben darüber, welche Netzwerkschnittstellen für abgehende Datenpakete verwendet werden sollen. Stellt der Mikroprozessor 50 fest, dass das Datenpaket zum IP-Endgerät 160 übertragen werden soll, wird das Datenpaket dem Lastverteilungsrouter 40 übergeben, der geprüft, ob das Datenpaket zu einer bestehenden Sitzung gehört, das erste Paket einer neuen Sitzung oder ein separates, d. h. einzelnes Datenpaket ist. Wenn das Datenpaket einer bestehenden Sitzung angehört, sieht der Lastverteilungsrouter 40 in der Routingtabelle 70 nach, über welchen Tunnel das Datenpaket übertragen werden soll. Handelt es sich beim Datenpaket um ein einzelnes Datenpaket oder um das erste Datenpaket einer neuen Sitzung, ermittelt der Lastverteilungsrouter 40 gemäß den zuvor beschriebenen Verfahren den Tunnel, über den das Datenpaket zu übertragen ist. Handelt es sich um eine neue Sitzung, wird die Routingtabelle im Speicher 70 entsprechend aktualisiert. Stellt der Mikroprozessor 50 des mobilen Knotens beispielsweise fest, dass ein Tunnel oder eine Netzwerk-Schnittstellenkarte ausgefallen ist oder die Kanalqualität eines Tunnels sich verschlechtert hat, über den eine laufende Sitzung übertragen wird, so ermittelt der Lastverteilungsrouter 40 für diese Sitzung oder zumindest für ein oder mehrere Datenpakete dieser Sitzung einen neuen Tunnel. Die Routingtabelle des Speichers 70 wird dann wieder entsprechend aktualisiert.

Die zuvor beschriebenen Algorithmen zur Auswahl des geeigneten Tunnels werden in gleicher Weise vom Lastverteilungsrouter 173 des BM-Servers 170 angewandt, um ein separates Datenpaket oder Datenpakete einer Sitzung zum mobilen Knoten 20 zu übertragen. So wird der BM-Server 170 vom mobilen Knoten 20 beispielsweise über den Ausfall einer Netzwerk-Schnittstellenkarte informiert, so dass gegebenenfalls der Lastverteilungsrouter 173 einen neuen Tunnel für Datenpakte einer laufenden Sitzung, die zum mobilen Knoten zu übertragen sind, auswählen kann. Die für Zuordnung der Tunnel zu Sitzungen ist in der im Speicher 175 abgelegten Routingtabelle abgespeichert. Mittels der Routingtabelle kann der Lastverteilungsrouter 173 und/oder der Mikroprozessor 176 erkennen, ob ein über das Internet 150 empfangenes Datenpaket über einen der Tunnel zum mobilen Knoten 20 oder gegebenenfalls zu einem anderen mobilen Knoten (nicht dargestellt) übertragen werden soll. Dank der eingesetzten Lastverteilungsrouter können die Tunnel für eine effiziente Datenübertragung ausgewählt werden, und zwar sowohl beim mobilen Knoten 20 als auch beim BM-Server 170.

Werden Datenpakete Sitzungs-basiert verteilt, muss festgestellt werden, zu welcher Sitzung ein Datenpaket gehört. Dem Fachmann sind Maßnahmen hierzu bekannt.

Wenn ein Tunnel während der Etablierung der Datenübertragung abgebrochen wird, müssen die Sitzungen, die diesen Tunnel zur Datenübertragung benutzt haben, auf andere verfügbare Tunnel verteilt werden. Hierfür können verschiedene Algorithmen verwendet werden.

Ein beispielhafter Algorithmus sieht vor, die Last Ln der anderen Tunnel unter Berücksichtigung einer neuen Sitzung (Ln) gemäß der Gleichung 6) wie folgt zu berechnen:

$$Ln = (MIT - T - Ts)/MIT \qquad\qquad 6)$$

Dann wird für eine neue Sitzung, die eine Datenmenge Ts pro Zeiteinheit senden möchte, die Netzwerkschnittstellenkarte oder der Tunnel mit maximalem Ln ausgewählt. Nach der Zuordnung der Sitzung wird deren aktuelle durchschnittlich gesendete DatenmengeT auf T+Ts aktualisiert. Auf diese Weise können die Datenpakete aller Sitzungen, die bisher über einen fehlerhaften Tunnel übertragen wurden, neu verteilt werden. Wenn der Mikroprozessor 50 erkennt, dass ein neuer Tunnel aufgebaut wurde, können Datenpakete laufender Sitzungen, die bisher über andere Tunnel übertragen wurden, dem neuen Tunnel zugeordnet werden.

Bei einer Paket-basierten Lastverteilung kann das Problem auftreten, dass Pakte beim Empfänger nicht in der Reihenfolge ankommen, in der sie abgesendet worden sind. Deshalb müssen der mobile Knoten 20 und der BM-Server 170 dafür sorgen, dass empfangene Pakete in der richtigen Reihenfolge weitergeleitet werden. Entsprechende Maßnahmen sind dem Fachmann bekannt.

Das Kommunikationssystem 10 sieht vor, dass der mobile Knoten 20 auch mit mehreren BM-Servern und der BM-Server 170 mit mehreren mobilen Knoten verbunden werden kann (nicht dargestellt).

Mehrere mit dem mobilen Knoten 20 verbundene BM-Server können dazu werden verwendet, die Störanfälligkeit des Kommunikationssystems 10 bei Ausfall des BM-Servers 170 zu reduzieren. Wenn der bedienende BM-Server 170 ausfällt, kann der mobile Knoten 20 mit einem anderen BM-Server verbunden werden, indem mehrere Kommunikationsverbindungen oder Tunnel zum neuen BM-Server aufgebaut werden, wie oben beschrieben. Hierzu muss dem mobilen Knoten 20 lediglich die IP-Adresse von weiteren BM-Servern bekannt sein.

Zudem kann der BM-Server 170 auch mehrere mobile Knoten bedienen. Hierzu kann der Lastverteilungsrouter 173 mehrere MLBR Instanzen beinhalten, welche den Lastverteilungsroutern der anderen mobilen Knoten zugeordnet sind. Um Datenpakete mit mehreren mobilen Knoten austauschen zu können, sollte der BM-Server 170 zumindest die IP-Adressen der jeweiligen mobilen Knoten, die virtuellen Adressen der aufgebauten Tunnel und gegebenenfalls die IP-Adressen der einem jeweiligen internen Zugangsnetz zugeordneten Teilnehmer kennen. Diese Informationen können im Speicher 172 des BM-Servers 170 von einem Systemadministrator während der Konfiguration des Kommunikationssystems 10 gespeichert oder zwischen dem BM-Server 170 und den mobilen Knoten nach dem Aufbau wenigstens eines Transporttunnels ausgetauscht werden. Ein Beispiel für eine Datenbank des BM-Servers 170, der mehrere mobile Knoten bedienen kann, ist in Tabelle 3 gezeigt. Diese Datenbank kann im Speicher 171 oder 172 abgelegt sein.

**Tabelle 3**

| Name | Bediente IP-Adressen | MLBR Instanz |
|---|---|---|
| Mobiler Knoten 1 | $IP_{BMC1}$, IPian1/NETian1 | mlbr1 |
| Mobiler Knoten 2 | $IP_{BMC2}$, IPian2/NETian2 | mlbr2 |
| Mobiler Knoten 3 | $IP_{BMC3}$, IPian3/NETian3 | mlbr3 |

Hierbei definieren IPian/NETian die IP-Adressen, die im internen Zugangsnetzwerk verwendet werden, das mit dem jeweiligen mobilen Knoten verbunden ist. Beim Empfang eines Datenpaketes wird die MLBR Instanz des Lastverteilungsrouters 173, die diese IP-Adresse bedient, aus der Datenbank ausgewählt. Die weitere Verarbeitung des Paketes wird, wie oben für den Fall eines einzelnen mobilen Knoten und eines einzelnen BM-Servers beschrieben, ausgeführt.

Nunmehr sei angenommen, dass eine neue Sitzung zwischen dem internen Gerät 200, welches einem Fahrgast des Fahrzeugs, in dem der mobile Knoten 20 aufgestellt ist, und dem mit dem öffentlichen Internet 150 verbundenen IP-Endgerät 160, gestartet werden soll.

Dazu sendet das interne Gerät 200 zunächst ein erstes Datenpaket in das interne Zugangsnetz 180. Das Datenpaket enthält einen Header, in dem die IP-Adresse des IP-Endgeräts 160 steht. Anhand der IP-Adresse des IP-Endgeräts 160 erkennt das Zugangsnetz 180, dass das Datenpaket zur Netzwerkschnittstelle 30 des mobilen Knoten 20 übertragen werden soll. Vermittlungsknoten des Zugangsnetzes 180 verfügen hierzu über die entsprechenden Routingtabellen. Der Mikroprozessor 50 oder der Lastverteilungsrouter 40 erkennt anhand der im Header stehenden IP-Adresse des IP-Endgeräts 160 und einer im Datenpaket enthaltenen Sitzungskennung, dass Datenpakete einer neuen Sitzung über einen noch auszuwählenden verfügbaren Tunnel zum IP-Endgerät 160 übertragen werden müssen. Daraufhin ermittelt der Lastverteilungsrouter 40, wie oben beschrieben, einen geeigneten Tunnel, mit dem der Datendurchsatz des mobilen Knotens effizient gefördert wird. Angenommen sei, dass der Lastverteilungsrouter 40 den Tunnel 141 ausgewählt hat. Die im Speicher 70 hinterlegte Routingtabelle wird derart aktualisiert, dass die Sitzungskennung, die IP-Adresse des internen Geräts 200, die IP-Adresse des IP-Endgeräts 160 und die virtuelle Adresse des Tunnels 141 gespeichert werden. Eine auf dem mobilen Knoten 20 laufende Tunnelsoftware 45 packt das vom IP-Gerät 200 empfangene Datenpaket beispielsweise in ein UDP-Paket ein, wenn ein UDP-Tunnel verwendet wird. Der IP-Header enthält dann als Quelladresse die IP Adresse IP2 der Netzwerk-Schnittstellenkarte 32 und als Zieladresse die IP-Adresse $IP_{BMS1}$ des BM-Server 170. Der UDP-Header enthält als Quellport die UDP-Portadresse Port A der Tunnelsoftware 45 und als Zielport die UDP-Portadresse Port B einer auf dem BM-Server 170 laufenden Tunnelsoftware 178. Es sei angemerkt, dass auf dem mobilen Knoten 20 und dem BM-Server 170 mehrere Tunnelsoftwaremodule laufen können, die jeweils einen Tunnel verwalten. Die UDP-Nutzlast enthält das ursprüngliche IP-Paket mit der Quelladresse des internen Geräts 200 und der IP-Zieladresse des IP-Endgeräts 160. Das UDP-Paket wird dann über den ausgewählten Tunnel 141 zum BM-Server 170 übertragen und unter Ansprechen auf den Zielport Port B der Tunnelsoftware 178 des BM-Servers 170 übergeben. Danach wird der IP-Header und der UDP-Header von der Tunnelsoftware 178 entfernt. Übrig bleibt das ursprüngliche IP-Paket, welches die Zieladresse des IP-Endgeräts 160 enthält. In einer im BM-Server 170 abgelegten Systemroutingtabelle ist definiert, dass die Schnittstelle mit der IP-Adresse $IP_{BMS2}$ für Pakete in das Internet 150 verwendet wird. Daraufhin wird das ursprüngliche Paket über das Internet 150 zum IP-Endgeräts 160 übertragen. In diesem Fall ist dem internen Endgerät 200 eine öffentliche IP-Adresse zugeordnet, um Pakete vom IP-Endgerät 160 an das interne Endgerät 200 zurückschicken zu können. Da in der Regel für die internen Endgeräte 190 und 200 keine öffentlichen IP-Adressen verwendet werden, kann vorzugsweise die im BM-Server 170 oder im mobilen Knoten 20 implementierte Netzwerkadressen-Umsetzungseinrichtung 174 bzw. 90 verwendet werden. Alle weiteren Datenpakete des internen Geräts 200, welche zu dieser Sitzung gehören, werden in derselben Weise über den Tunnel 141 zum BM-Server 170 und von dort zum IP-Endgerät 160 übertragen. Das IP-Endgerät 160 erzeugt ein oder mehrere UDP-Antwortpakete, die zum internen Gerät 200 übertragen werden sollen. Gemäß einer Ausführungsform enthält der IP-Header des UDP-Pakets als Quelladresse die IP-Adresse des IP-Endgeräts 160 und als Zieladresse die öffentliche IP-Adresse des internen Geräts 200 oder, wenn die Netzwerkadressen-Umsetzungseinrichtung 174 des BM-Servers 170 verwendet wird, die IP-Adresse $IP_{BMS2}$ des BM-Servers 170. Die UDP-Nutzlast enthält Applikation oder Nutzdaten für das interne Gerät 200. Das UDP-Paket wird am BM-Server 170 empfangen. Wird die Netzwerkadressen-Umsetzungseinrichtung 174 verwendet, wird das UDP-Paket zunächst der Netzwerkadressen-Umsetzungseinrichtung 174 zugeführt, die die Adresse $IP_{BMS2}$ in die IP-Zieladresse des internen Geräts 200 zurück umwandelt. Wenn kein NAT-Verfahren verwendet wird, enthält das UDP-Paket bereits als Zieladresse die IP-Adresse des internen Geräts 200. Unter Zuhilfenahme der Systemroutingtabelle erkennt der Mikroprozessor 176 des BM-Servers 170, dass das empfangene Paket dem Lastverteilungsrouter 173 zugeführt werden muss. Wenn der BM-Server 170 mehrere mobile Knoten bedient, muss der Lastverteilungsrouter 173 mit Hilfe der im Speicher 172 abgelegten Systemroutingtabelle weiter prüfen, welche MLBR-Instanz für die Verarbeitung des empfangenen Pakets verantwortlich ist. Im vorliegenden Beispiel kann das empfangene Paket nur zum mobilen Knoten 20 übertragen werden. Wie zuvor der Lastverteilungsrouter 40 des mobilen Knotens ermittelt nunmehr in ähnlicher Weise der Lastverteilungsrouter 173 des BM-Servers 170 den Tunnel, über den das empfangene Datenpaket zum mobilen Knoten 20 und dann zum internen Gerät 200 übertragen wird. Angenommen sei, dass der Lastverteilungsrouter 173 den Tunnel 142 ausgewählt hat. Darauf hin aktualisiert er die im Speicher 175 hinterlegte Routingtabelle derart, dass die vom IP-Endgeräte 160 kommenden und für das interne IP-Gerät 200 bestimmten Datenpakete der neu gestarteten Sitzung immer über den Tunnel 142 zum mobilen Knoten 20 übertragen werden. Das weiterzuleitende Datenpaket wird von der Tunnelsoftware 178 zur Übertragung zum mobilen Knoten 20 in ein UDP-Paket eingebettet. Das UDP-Paket weist einen IP-Header auf, der als Quelladresse die IP-Adresse $IP_{BMS1}$ des BM-Servers 170 und als Zieladresse die IP-Adresse IP3 des mobilen Knotens 20 enthält. Weiterhin ist ein UDP-Header vorhanden, der als Quellport die UDP-Portadresse Port B der Tunnelsoftware 178 sowie als Zielport die UDP-Portadresse Port A der Tunnelsoftware 45 enthält. Die UDP-Nutzlast umfasst das originale IP-Paket oder, wenn das NAT-Verfahren angewendet wird, das Paket mit der zurück umgewandelten Adresse des IP-Endgeräts 160, welches als IP-Header die Quelladresse des IP-Endgeräts 160 und als Zieladresse die IP-Adresse $IP_{Hostn}$ des internen Geräts 200 und die eigentlichen Nutzdaten enthält. Der mobile Knoten 20 empfängt das UDP-Paket an der Netzwerk-Schnittstellenkarte 33, die das Paket unter Ansprechen auf den Zielport Port A der Tunnelsoftware 45 übergibt. Die Tunnelsoftware 45 gewinnt das Datenpaket aus dem empfangenen UDP-Paket, welches für das interne Gerät 200 bestimmt. Dieses Paket enthält als Quelladresse die IP-Adresse des IP-Endgeräts 160 und als Zieladresse die IP-Adresse des internen Geräts 200. Mittels der im mobilen Knoten 20 abgelegten Systemroutingtabelle erkennt der Mikroprozzesor 50, dass das Datenpaket zur Netzwerkschnittstelle 30 weitergeleitet werden muss. Über die Netzwerkschnittstelle 30 und das interne Zugangsnetz 180 wird das Datenpaket zum IP-Gerät 200 übertragen. In ähnlicher Weise werden die von dem IP-Endgerät 160 übertragenen Datenpakete, die zu dieser Sitzung gehören, über den BM-Server 170 und den Tunnel 142 zum mobilen Knoten 20 und von dort zum internen IP-Gerät 200 weitergeleitet.

Fällt der Tunnel 141 aus, über den Datenpakete der gestarteten Sitzung zum BM-Server 170 übertragen werden, sucht der Lastverteilungsrouter 40 für diese Sitzung in der zuvor beschriebenen Weise einen anderen verfügbaren Tunnel auf. Ein Grund für den Ausfall des Tunnel 141 kann sein, dass die IP-Adresse der Netzwerkschnittstellenkarte 32, die dem Tunnel 141 zugewiesen wurde, aufgrund der Bewegung des mobilen Knotens 20 geändert werden muss. Beispielsweise besteht nunmehr eine Konnektivität zwischen der Netzwerk-Schnittstellekarte 32 und der Basisstation 131 des Zugangsnetzes 130. Das Zugangsnetz 130 weist dann der Netzwerk-Schnittstellenkarte 32 eine neue IP-Adresse zu. Anschließend initiiert der mobile Knoten 20 den Aufbau eines Tunnels über die Netzwerk-Schnittstellenkarte 32 zum BM-Server 170. Die neue IP-Adresse der Netzwerkschnittstellenkarte 32 und die virtuelle IP-Adresse des einen neuen Tunnel werden dann dem BM-Server 170 vom mobilen Knoten 20 über den aufgebauten Tunnel mitgeteilt. Aus ähnlichem Grund kann auch der Tunnel 142 ausfallen, der vom BM-Server 170 für die Übertragung von Datenpakete der gestarteten Sitzung zum mobilen Knoten 20 benutzt wird. In diesem Fall sucht der Lastverteilungsrouter 173 einen anderen Tunnel gemäß den zuvor beschriebenen Algorithmen aus. Auf diese Weise ist sichergestellt, dass Übertragung von Datenpaketen, die zu dieser Sitzung gehören, nicht unterbrochen werden muss, auch wenn sich der mobile Knoten 20 bewegt und demzufolge IP-Adressen der Netzwerk-Schnittstellenkarten 31, 32, 33 geändert werden müssen.

Angemerkt sei, dass der beschriebene Aufbau von UDP-Paketen zur Übertragung von Datenpaketen vom internen IP-Gerät 200 zum IP-Endgerät 160 und umgekehrt unter Einbindung des mobilen Knotens 20 und des BM-Servers 170 nur ein Beispiel darstellt.

Mit dem oben beschriebenen Kommunikationssystem 10 können unter Anderem folgende Verfahren durchgeführt werden:

1. Senden von Datenpaketen über einen oder mehrere Tunnel mit besserer Qualität hinsichtlich eines höheren verfügbaren Durchsatzes und einer geringeren Übertragungsverzögerung, und zwar sowohl vom mobilen Knoten 20 zum IP-Teilnehmer 160 als auch in umgekehrter Richtung unter Verwendung des BM-Servers 170.
2. Feststellen des Status, d. h. der Verfügbarkeit, und der Qualität einzelner Transporttunnel zwischen dem mobilen Knoten 20 und dem BM-Server 170.
3. Verteilung von einzelnen Datenpaketen und/oder Sitzungen auf mehrere verfügbare Tunnel in Abhängigkeit von der ermittelten Kanalqualität der verfügbaren Tunnels, wobei eine Sitzungs-basierte und/oder Paket-basierte Lastverteilung unterstützt wird.
4. Datenaustausch zwischen mehreren mobilen Knoten und einem einzigen BM-Server.

**Patentansprüche**

1. Verfahren zur unterbrechungsfreien Datenübertragung zwischen einem mobilen Knoten (20) und wenigstens einem IP-Teilnehmer (160), der mit einem öffentlichen IP-Netz (150) verbunden ist, wobei der mobile Knoten mehrere Netzwerk-Funkschnittstellen (31, 32, 33) aufweist, mit folgenden Schritten:

a) Zuordnen jeweils einer IP-Adresse wenigstens einigen der Netzwerk-Funkschnittstellen;
b) Aufbauen einer Kommunikationsverbindung (140, 141, 142) zwischen jeder Netzwerk-Funkschnittstelle (31, 32, 33), der eine IP-Adresse zugeordnet worden ist, und wenigstens einer Kommunikations-Verwaltungseinrichtung (170), die dem IP-Netz (150) zugeordnet ist;
c) Ermitteln der Verbindungsqualität jeder aufgebauten Kommunikationsverbindung zu vorbestimmten Zeitpunkten;
d) Bereitstellen wenigstens eines Datenpakets, das vom mobilen Knoten (20) zu wenigstens einem mit dem IP-Netz verbundenen IP-Teilnehmer (160) übertragen werden soll;
e) Übertragen des wenigstens einen Datenpakets über wenigstens eine Kommunikationsverbindung zur Kommunikations-Verwaltungseinrichtung(170), wobei die wenigstens eine Kommunikationsverbindung vom mobilen Knoten in Abhängigkeit von den ermittelten Verbindvingsqualitäten ausgewählt wird;
f) Weiterleiten des wenigstens einen Datenpakets von der Kommunikations-Verwaltungseinrichtung (170) über das IP-Netz (150) zu dem oder den jeweiligen IP-Teilnehmern (160), **dadurch gekennzeichnet, dass** Schritt e) die folgenden Schritte umfasst:

e1) Zählen im mobilen Knoten (20) die gesendete Datenmenge pro Zeiteinheit ($T_{s,k}1$, $T_{s,k}2$, $T_{s,k}3$) für jede aufgebaute Kommunikationsverbindung;
e2) Zählen in der Kommunikation-Verwaltungseinrichtung (170) die über die jeweilige Kommunikationsverbindung empfangene Datenmenge pro zeiteinheit ($T_{e,v}1$, $T_{e,v}2$, $T_{e,v}3$),
e3) Bilden für jede Kommunikationsverbindung die Datendifferenz $dT_{u,n} = T_{s,k}n - T_{e,v}n$, wobei n die Anzahl aufgebauter Kommunikationsverbindungen ist;
wobei zur Übertragung des wenigstens eines Datenpakets vom mobilen Knoten (20) zur Kommunikation-

EP 2 028 895 B1

Verwaltungseinrichtung (170) die
Kommunikationsverbindung mit der kleinsten Differenz $dT_{u,n}$ ausgewählt wird.

2. Verfahren nach Anspruch 1,
   **dadurch gekennzeichnet, dass**
   jeder aufgebauten Kommunikationsverbindung (140, 141, 142) eine logische Adresse zugeordnet wird und dass nach dem Aufbau der jeweiligen Kommunikationsverbindungen deren logische Adressen und die IP-Adresse der entsprechenden Netzwerk-Funkschnittstelle in der Kommunikations-Verwaltungaeinrichtung (170) gespeichert werden und eine der Kommunikations-Verwaltungseinrichtung (170) zugeordnete IP-Adresse ($IP_{BMS1}$) im mobilen Knoten (20) gespeichert wird, wobei die logische Adressen, die IP-Adressen der Netz-Funkschnittstellen und die IP-Adresse der Kommunikations-Verwaltungseinrichtung zur Übertragung von Daten über die jeweiligen Kommunikationsverbindungen verwendet werden.

3. Verfahren nach Anspruch 1 oder 2,
   **dadurch gekennzeichnet, dass**
   gemäß Schritt a) den Netz-Funkschnittstellen (31, 32, 33) jeweils eine IP-Adresse zugewiesen wird, wenn der mobile Knoten (20) im Versorgungsbereich wenigstens eines Anbindungspunktes (110, 120; 131) wenigstens eines Zugangsnetzes (100; 130) ist.

4. Verfahren nach Anspruch 3,
   **dadurch gekennzeichnet, dass**
   bei Bewegung des mobile Knotens (20) einer oder mehreren Netz-Funkschnittstellen von dem wenigstens einen Zugangsnetz jeweils eine neue IP-Adresse zugewiesen wird,
   eine neue Kommunikationsverbindung zwischen der Netz-Funkschnittstelle, deren IP-Adresse geändert worden ist, und der Kommunikations-Verwaltungseinrichtung (170) aufgebaut wird, und dass
   die neu zugewiesenen IP-Adressen im mobilen Knoten und der Kommunikations-Verwaltungseinrichtung gespeichert werden.

5. Verfahren nach einem der vorstehenden Ansprüche,
   **dadurch gekennzeichnet, dass**
   jedem mobilen Knoten (20) eine individuelle Kennung zugeordnet wird, die in der Kommunikations-Verwaltungseinrichtung (170) gespeichert wird.

6. Verfahren nach einem der vorstehenden Ansprüche,
   **dadurch gekennzeichnet, dass**
   wenigstens ein für den mobilen Knoten (20) bestimmtes Datenpaket von wenigstens einem mit dem öffentlichen IP-Netz (150) verbundenen IP-Teilnehmer (160) zur Kommunikations-Verwaltungseinrichtung (170) übertragen wird, dass
   das wenigstens eine Datenpaket über wenigstens eine bestehende Kommunikationsverbindung zum mobilen Knoten (20) weitergeleitet werden, wobei die wenigstens eine Kommunikationsverbindung von der Kommunikations-Verwaltungseinrichtung (170) in Abhängigkeit von den ermittelten Verbindungsqualitäten ausgewählt wird.

7. Verfahren nach einem der vorstehenden Ansprüche,
   **dadurch gekennzeichnet, dass**
   für jedes zu übertragende Datenpaket eine Kommunikationsverbindung in Abhängigkeit von den ermittelten Verbindungsqualitäten ausgewählt wird.

8. Verfahren nach einem der Ansprüche 1 bis 6,
   **dadurch gekennzeichnet, dass**
   Datenpakete einer Sitzung über die gleiche Kommunikationsverbindung übertragen werden.

9. Verfahren nach einem der Ansprüche 6 bis 8,
   **dadurch gekennzeichnet, dass**
   Schritt e) die folgenden Schritte umfasst:

   e4) Zählen in der Kommunikations-Verwaltungseinrichtung (170) die zum mobilen Knoten gesendete Datenmenge pro Zeiteinheit ($T_{s,v}1$, $T_{s,v}2$, $T_{e,v}3$) für jede aufgebaute Kommunikationsverbindung;
   e5) Zählen im mobilen Knoten (20) die über die jeweilige Kommunikationsverbindung empfangene Datenmenge

pro Zeiteinheit ($T_{e,k}1$, $T_{e,k}2$, $T_{e,k}3$),

e6) Bilden für jede Kommunikationsverbindung die Datendifferenz $dT_{d,n} = T_{s,v}n - T_{e,k}n$, wobei n die Anzahl aufgebauter Kommunikationsverbindungen ist;

wobei zur Übertragung wenigstens eines Datenpakets von der Kommunikations-Verwaltungseinrichtung zum mobilen Knoten die Kommunikationsverbindung mit der kleinsten Differenz $dT_{d,n}$ ausgewählt wird.

10. Verfahren nach Anspruch 9,
**dadurch gekennzeichnet, dass**
im mobilen Knoten (20) und in der Kommunikationsverwaltungseinrichtung (170) für jede NetzFunkschnittstelle (31, 32, 33) eine mittlere Übertragungsverzögerung (Round Trip Time) gespeichert wird, und dass
zur Übertragung wenigstens eines Datenpakets vom mobilen Knoten zur Kommunikations-Verwaltungseinrichtung (170) und/oder umgekehrt die Kommunikationsverbindung in Abhängigkeit von der Datendifferenz $dT_{u,n}$ bzw. $dT_{d,n}$ und/oder der mittleren Übertragungsverzögerung ausgewählt wird.

11. Verfahren nach Anspruch 10,
**dadurch gekennzeichnet, dass**
zur Übertragung wenigstens eines Datenpakets vom mobilen Knoten (20) zur Kommunikations-Verwaltungseinrichtung (170) und/oder umgekehrt die Kommunikationsverbindung mit der minimalen Übertragungsverzögerung ausgewählt wird, wenn mehrere Kommunikationsverbindungen die gleiche Datendifferenz aufweisen.

12. Verfahren nach einem der Ansprüche 9 bis 11,
**dadurch gekennzeichnet, dass**
für jede Netz-Funkschnittstelle (31, 32, 33) im mobilen Knoten (20 und in der Kommunikations-Verwaltungseinrichtung (170) ein vorbestimmter, maximaler Datendurchsatz (MIT) gespeichert wird, und dass
zur Übertragung wenigstens eines Datenpakets vom mobilen Knoten (20) zur Kommunikations-Verwaltungseinrichtung (170) und/oder umgekehrt die Kommunikationsverbindung (140, 141, 142) in Abhängigkeit von der Datendifferenz $dT_{u,n}$ bzw. $dT_{d,n}$, der mittleren Übertragungsverzögerung und/oder der maximalen Datendurchsätze ausgewählt wird.

13. Verfahren nach einem der Ansprüche 9 bis 12,
**dadurch gekennzeichnet, dass**
für jede aufgebaute Kommunikationsverbindung (140, 141, 142) die aktuelle verfügbare Last in Richtung vom mobilen Knoten (20) zur Kommunikations-Verwaltungseinrichtung (170) gemäß der Gleichung $L_n = (MIT - T_{s,k}n)/MIT$ und in Richtung von der Kommunikations-Verwaltungseinrichtung zum mobilen Knoten gemäß der Gleichung $L_n = (MIT - T_{s,v}n)/MIT$ berechnet wird, wobei MIT der maximale Datendurchsatz der jeweiligen Netz-Schnittstelle (31, 32, 33), $T_{s,k}n$ die pro Zeiteinheit vom mobilen Knoten über die jeweilige Kommunikationsverbindung gesendete Datenmenge und $T_{s,v}n$ die pro Zeiteinheit von der Kommunikations-Verwaltungseinrichtung (170) über die jeweilige Kommunikationsverbindung gesendete Datenmenge ist, und dass
zur Übertragung wenigstens eines Datenpakets vom mobilen Knoten (20) zur Kommunikations-Verwaltungseinrichtung (170) und/oder umgekehrt die Kommunikationsverbindung (140, 141, 142) mit der größten aktuellen verfügbaren Last ausgewählt wird, wenn mehrere Kommunikationsverbindungen die gleiche Datendifferenz $dT_{u,n}$ bzw. $dT_{d,n}$, die gleiche mittlere Übertragungsverzögerung und/oder den gleichen maximalen Datendurchsatz aufweisen.

14. Verfahren nach einem der Ansprüche 9 bis 13,
**dadurch gekennzeichnet, dass**
zur Übertragung wenigstens eines Datenpakets vom mobilen Knoten zur Kommunikations-Verwaltungseinrichtung und/oder umgekehrt die Kommunikationsverbindung mit der minimalen Überlastung ausgewählt wird, die gemäß der Gleichung $mO = dT_{u,n}/MIT$ bzw. $mO = dT_{d,n}/MIT$ berechnet wird, wobei MIT der maximale Datendurchsatz der der jeweiligen Kommunikationsverbindung zugeordneten Netz-Funkschnittstelle ist.

15. Verfahren nach einem der Ansprüche 1 bis 14,
**dadurch gekennzeichnet, dass**
die aktuelle Übertragungsverzögerung (RTT) zu vorbestimmten Zeitpunkten gemessen wird und dass zur Übertragung wenigstens eines Datenpakets vom mobilen Knoten zur Kommunikations-Verwaltungseinrichtung und/oder umgekehrt die Kommunikationsverbindung in Abhängigkeit von der gemessenen aktuellen Übertragungsverzögerungen ausgewählt wird.

**16.** Verfahren nach einem der Ansprüche 1 bis 15,
**dadurch gekennzeichnet, dass**
der mobile Knoten (20) mit einem internen Kommunikationsnetz (180) verbunden, wobei für einen IP-Teilnehmer (160) bestimmte Daten von wenigstens einem mit dem internen Kommunikationsnetz (180) verbundenen internen Teilnehmer (190, 200) zum mobilen Knoten (20) übertragen werden und die für den internen Teilnehmer (190, 200) bestimmte Daten über den mobilen Knoten (20) und das interne Kommunikationsnetz (180) zum internen Teilnehmer weitergeleitet werden.

**17.** Kommunikationssystem (10) zur unterbrechungsfreien Datenübertragung zwischen einem mobilen Knoten und wenigstens einem IP-Teilnehmer, der mit einem öffentlichen IP-Netz verbunden ist, mit wenigstens einem mobilen Knoten (20), der mehrere Netz-Funkschnittstellen (31, 32, 33), einen Lastverteilungsrouter (40) und eine Steuereinrichtung (50) aufweist,
wenigstens einem Zugangsnetz (100, 130) mit mehreren Anbindungspunkten (110, 120; 131) zur drahtlosen Kommunikation mit wenigstens einigen der Netz-Funkschnittstellen (31, 32, 33) des mobilen Knotens (20), wobei das Zugangssnetz (110, 130) zum Zuordnen von IP-Adressen zu den Netz-Funkschnittstellen ausgebildet ist,
einem mit dem wenigstens einen Zugangsnetz (110, 130) verbundenen öffentlichen IP-Netz (150), mit welchem wenigstens ein IP-Teilnehmer (160) verbunden ist, wenigstens eine mit dem öffentlichen IP-Netz (150) verbundenen Kommunikations-Verwaltungseinrichtung (170), wobei die Steuerreinrichtung (50) des mobilen Knotens (20) zum Aufbauen einer Kommunikationsverbindung (140, 141, 142) über jede Netzwerk-Funkschnittstelle (31, 32, 33), der eine IP-Adresse zugeordnet worden ist, zu der wenigstens einen Kommunikations-Verwaltungseinrichtung (170) ausgebildet ist,
wobei der mobile Knoten (20) eine Einrichtung zum Ermitteln der Verbindungsqualität jeder aufgebauten Kommunikationsverbindung aufweist,
und wobei der Lastverteilungsrouter (40) für jedes zu übertragende Datenpaket oder für eine Gruppe von Datenpaketen eine Kommunikationsverbindung in Abhängigkeit von den ermittelten Verbindungsqualitäten ausgewählt, wobei
die Kommunikations-Verwaltungseinrichtung (170) zum Empfangen von über wenigstens eine Kommunikationsverbindung übertragenen Datenpaketen und zum Weiterleiten der empfangenen Datenpakete über das öffentliche IP-Netz (150) zu wenigstens einem bestimmten IP-Teilnehmer (160) ausgebildet ist,
**dadurch gekennzeichnet, dass**
der mobile Knoten (20) eine Einrichtung zum Zählen der pro Zeiteinheit über jede aufgebaute Kommunikationsverbindung gesendeten Datenmenge ($T_{s,k}1$, $T_{s,k}2$, $T_{s,k}3$) und die Kommunikations-Verwaltungseinrichtung (170) eine Einrichtung zum Zählen der pro Zeiteinheit über jede aufgebaute Kommunikationsverbindung empfangenen Datenmenge

($T_{e,v}1$, $T_{e,v}2$, $T_{e,v}3$) aufweist, wobei

der mobile Knoten (20) eine Einrichtung zum Bilden der Datendifferenz $dT_{u,n} = T_{s,k}n - T_{e,v}n$ für jede Kommunikationverbindung aufweist, wobei n die Anzahl aufgebauter Kommunikationsverbindungen (140, 1^41, 142) ist, und wobei
der Lastverteilungsrouter (40) des mobilen Knotens (20) zur Übertragung des wenigstens eines Datenpakets zur Kommunikations-Verwaltungseinrichtung (170) die Kommunikationsverbindung mit der kleinsten Differenz $dT_{u,n}$ auswählt.

**18.** Kommunikationssystem nach Anspruch 17,
**dadurch gekennzeichnet, dass**
der mobile Knoten (20) jeder aufgebauten Kommunikationsverbindung eine logische Adresse zuordnet,
wobei der mobile Knoten (20) einen Speicher (60) aufweist, in dem die logische Adresse jeder Kommunikationsverbindung (140, 141, 142) und eine der Kommunikations-Verwaltungseinrichtung (170) zugeordnete IP-Adresse ($IP_{BMS1}$) gespeichert sind, und wobei die Kommunikations-Verwaltungseinrichtung (170) einen Speicher (172) aufweist, in dem die logische Adresse jeder Kommunikationsverbindung und die IP-Adressen der Netz-Funkschnittstellen gespeichert sind.

**19.** Kommunikationssystem nach Anspruch 17 oder 18,
**dadurch gekennzeichnet, dass**
die Kommunikations-Verwaltungseinrichtung (170) einen Speicher zum Speichern (171) der ermittelten Verbindungsqualitäten und einen Lastverteilungsrouter (173) aufweist, der für jedes Datenpaket oder für eine Gruppe von Datenpaketen, die zum mobilen Knoten übertragen werden sollen, eine Kommunikationsverbindung (140, 141, 142) in Abhängigkeit von den ermittelten Verbindungsqualitäten ausgewählt, wobei
die Kommunikations-Verwaltungseinrichtung (170) zum Empfangen von über das öffentliche IP-Netz (150) übertragenen Datenpaketen und zum Weiterleiten der empfangenen Datenpakete über die ausgewählte Kommunikationsverbindung (140, 141, 142) zum mobilen Knoten (20) ausgebildet ist.

20. Kommunikationssystem nach einem der Ansprüche 17 bis 19,
**dadurch gekennzeichnet, dass**
das wenigstens eine Zugangsnetz (100, 130) zum Ändern der den Netz-Funkschnittstellen (31, 32, 33) zugewiesenen IP-Adressen ausgebildet ist, dass die Steuereinrichtung (50) des mobilen Knoten (20) zum Aufbauen einer Kommunikationsverbindung hinsichtlich der Netz-Funkschnittstelle, deren IP-Adresse geändert worden ist, ausgebildet ist, wobei der mobile Knoten (20) die geänderte IP-Adresse der Kommunikations-Verwaltungseinrichtung (170) mitteilt.

21. Kommunikationssystem nach einem der Ansprüche 17 bis 20,
**dadurch gekennzeichnet, dass**
die Kommunikations-Verwaltungseinrichtung (170) eine Einrichtung zum Zählen der pro Zeiteinheit über jede aufgebaute Kommunikationsverbindung (140, 141, 142) gesendeten Datenmenge ($T_{s,v}1$, $T_{s,v}2$, $T_{s,v}3$) und der mobile Knoten (20) eine Einrichtung zum zählen der pro Zeiteinheit über die jeweilige Kommunikationsverbindung empfangenen Datenmenge ($T_{e,k}1$, $T_{e,k}2$, $T_{e,k}3$) aufweist, wobei die Kommunikations-Verwaltungseinrichtung (170) zum Bilden der Datendifferenz $dT_{d,n}= T_{s,v}n- T_{e,k}n$ für jede Kommunikationverbindung (140, 141, 142) ausgebildet ist, wobei n die Anzahl aufgebauter Kommunikationsverbindungen (140, 141, 142) ist, und wobei der Lastverteilungsrouter (173) der Kommunikations-Verwaltungseinrichtung (170) zur Übertragung wenigstens eines Datenpakets zum mobilen Knoten (20) die Kommunikationverbindung (140, 141, 142) mit der kleinsten Differenz $dT_{d,n}$ auswählt.

22. Kommunikationssystem nach einem der Ansprüche 17 bis 21,
**dadurch gekennzeichnet, dass**
der mobile Knoten (20) und die Kommunikations-Verwaltungseinrichtung (170) jeweils einen Speicher 70; 175) zum Ablegen einer mittleren Übertragungsverzögerung (Round Trip Time) für jede Netz-Funkschnittstelle (31, 32, 33) aufweisen, und dass
der Lastverteilungsrouter (40; 173)) des mobilen Knotens (20) und/oder der Kommunikations-Verwaltungseinrichtung (170) zur Übertragung wenigstens eines Datenpakets die Kommunikationsverbindung in Abhängigkeit der Datendifferenz $dT_{u,n}$ bzw. $dT_{d,n}$ und/oder der mittleren Übertragungsverzögerung auswählt.

23. Kommunikationssystem nach Anspruch 22,
**dadurch gekennzeichnet, dass**
der Lastverteilungsrouter (40; 173) des mobilen Knotens (20) und/oder der Kommunikations-Verwaltungseinrichtung (170) zur Datenübertragung die Kommunikationsverbindung mit der kleinsten Übertragungsverzögerung auswählt, wenn mehrere Kommunikationsverbindungen die gleiche Datendifferenz aufweisen.

24. Kommunikationssystem nach einem der Ansprüche 17 bis 23,
**dadurch gekennzeichnet, dass**
für jede Netz-Funkschnittstelle (31, 32, 33) im mobilen Knoten (20) und in der Kommunikations-Verwaltungseinrichtung (170) ein vorbestimmter, maximaler Datendurchsatz (MIT) gespeichert ist, und dass
der Lastverteilungsrouter (40; 173) des mobilen Knotens und/oder der Kommunikations-Verwaltungseinrichtung zur Datenübertragung eine Kommunikationsverbindung in Abhängigkeit von der Datendifferenz $dT_{u,n}$ bzw. $dT_{d,n}$, der mittleren Übertragungsverzögerung und/oder der maximalen Datendurchsätze auswählt.

25. Kommunikationssystem nach einem der Ansprüche 17 bis 24,
**dadurch gekennzeichnet, dass**
der Lastverteilungsrouter (40) des mobilen Knotens (20) für jede verfügbare Kommunikationsverbindung (140, 141, 142) die aktuelle verfügbare Last in Richtung zur Kommunikations-Verwaltungseinrichtung gemäß der Gleichung $L_n = (MIT- T_{s,k}n)/MIT$ und der Lastverteilungsrouter (173) der Kommunikations-Verwaltungseinrichtung (170) für jede verfügbare Kommunikationsverbidung (140, 141, 142) die aktuelle verfügbare Last zum mobilen Knoten gemäß der Gleichung $L_n = (MIT-T_{s,v}n)/MIT$ berechnet, wobei MIT der maximale Datendurchsatz der jeweiligen Netz-Schnittstelle, $T_{s,k}n$ die pro Zeiteinheit vom mobilen Knoten (20) über die jeweilige Kommunikationsverbindung (140, 141, 142) gesendete Datenmenge und $T_{s,v}$n die pro Zeiteinheit von der Kommunikations-Verwaltungseinrichtung (170) über die jeweilige Kommunikationsverbindung (140, 141, 142) gesendete Datenmenge ist, und dass zur Übertragung wenigstens eines Datenpakets der Lastverteilungsrouter (40; 173) des mobilen Knotens und/oder der Kommunikations-Verwaltungseinrichtung die Kommunikationsverbindung mit der größten aktuellen verfügbaren Last auswählt, wenn mehrere Kommunikationsverbindungen die gleiche Datendifferenz $dT_{u,n}$ bzw. $dT_{d,n}$, die gleiche mittlere Übertragungsverzögerung und/oder den gleichen maximalen Datendurchsatz aufweisen.

26. Kommunikationssystem nach einem der Ansprüche 17 bis 24,
    **dadurch gekennzeichnet, dass**
    der Lastverteilungsrouter (40; 173) des mobilen Knotens (20) und/oder der Kommunikations-Verwaltungseinrichtung (170) die Kommunikationsverbindung mit der minimalen Überlastung auswählt, die gemäß der Gleichung $mO = dT_{u,n}$ /MIT bzw. $mO = dT_{d,n}$ /MIT berechnet wird, wobei MIT der maximale Datendurchsatz der der jeweiligen Kommunikationsverbindung zugeordneten Netz-Funkschnittstelle ist.

27. Kommunikationssystem nach einem der Ansprüche 17 bis 26,
    **gekennzeichnet durch**
    eine Einrichtung zum Messen der aktuellen Übertragungsverzögerung (RTT) zu vorbestimmten Zeitpunkten, wobei der Lastverteilungsrouter (40; 173) des mobilen Knotens (20) und/oder der Kommunikations-Verwaltungseinrichtung (170) zur Datenübertragung eine Kommunikationsverbindung (140, 141, 142) in Abhängigkeit von der gemessenen aktuellen Übertragungsverzögerungen auswählt.

28. Kommunikationssystem nach einem der Ansprüche 18 bis 27,
    **dadurch gekennzeichnet, dass**
    der mobile Knoten (20) mit einem internen Kommunikationsnetz (180) verbunden.

29. Kommunikationssystem nach Anspruch 28,
    **dadurch gekennzeichnet, dass**
    der mobile Knoten (20) und das interne Kommunikationsnetz (180) in einem Fahrzeug untergebracht ist.

**Claims**

1. A method for uninterrupted data transfer between a mobile node (20) and at least one IP subscriber (160) which is connected to a public IP network (150), wherein the mobile node comprises a plurality of network wireless interfaces (31, 32, 33), comprising the steps of:

    a) assigning a respective IP address to at least some of the network wireless interfaces;
    b) establishing a communication connection (140, 141, 142) between each network wireless interface (31, 32, 33) which had been assigned an IP address and at least one communication management device (170) that is associated with the IP network (150);
    c) determining the connection quality of each established communication connection at predetermined times;
    d) providing at least one data packet to be transmitted from the mobile node (20) to at least one IP subscriber (160) connected to the IP network;
    e) transmitting the at least one data packet via at least one communication connection to the communication management device (170), wherein the at least one communication connection is selected by the mobile node based on the connection qualities determined;
    f) forwarding the at least one data packet from the communication management device (170) via the IP network (150) to the respective one or more IP subscriber(s) (160), **characterized in that**

    step e) comprises the steps of:
    e1) counting, in the mobile node (20), the amount of data transmitted per unit time ($T_{s,k}1$, $T_{s,k}2$, $T_{s,k}3$) for each communication connection established;
    e2) counting, in the communication management device (170), the amount of data received per unit time ($T_{e,v}1$, $T_{e,v}2$, $T_{e,v}3$) via the respective communication connection established;
    e3) determining, for each communication connection, the data difference $dT_{u,n} = T_{s,k}n - T_{e,v}n$, wherein n is the number of communication connections established;
    wherein the communication connection with the smallest difference $dT_{u,n}$ is selected for transmitting the at least one data packet from the mobile node (20) to the communication management device (170).

2. The method according to claim 1, **characterized in that** each established communication connection (140, 141, 142) is assigned a logical address; and that once the respective communication connections have been established, their logical addresses and the IP address of the corresponding network wireless interface are stored in the communication management device (170), and an IP address ($IP_{BMS1}$) assigned to the communication management device (170) is stored in the mobile node (20), wherein the logical addresses, the IP addresses of the network wireless interfaces and the IP address of the communication management device are used for data transfer via the respective communication connections.

3. The method according to claim 1 or 2, **characterized in that**
according to step a) each of the network wireless interfaces (31, 32, 33) is assigned an IP address when the mobile node (20) is in the coverage area of at least one point of attachment (110, 120; 131) of at least one access network (100; 130).

4. The method according to claim 3, **characterized in that** when the mobile node (20) moves, a new IP address is assigned to one or more network wireless interfaces by the at least one access network;
a new communication connection is established between the network wireless interface whose IP address had been changed and the communication management device (170); and that
the newly assigned IP addresses are stored in the mobile node and in the communication management device.

5. The method according to any of the preceding claims,
**characterized in that**
each mobile node (20) is assigned an individual identifier which is stored in the communication management device (170).

6. The method according to any of the preceding claims,
**characterized in that**
at least one data packet intended for the mobile node (20) is transmitted by at least one IP subscriber (160) connected to the public IP network (150) to the communication management device (170); and that the at least one data packet is forwarded to the mobile node (20) via at least one existing communication connection; wherein the at least one communication connection is selected by the communication management device (170) based on the connection qualities determined.

7. The method according to any of the preceding claims,
**characterized in that**
for each data packet to be transmitted a communication connection is selected based on the connection qualities determined.

8. The method according to any of claims 1 to 6,
**characterized in that**
data packets of one session are transmitted via the same communication connection.

9. A method according to any of claims 6 to 8,
**characterized in that**
step e) comprises the steps of:

e4) counting, in the communication management device (170), the amount of data transmitted to the mobile node per unit time ($T_{s,v}1$, $T_{s,v}2$, $T_{s,v}3$) for each established communication connection;
e5) counting, in the mobile node (20), the amount of data received per unit time ($\mathbf{T}_{e,k}1$, $\mathbf{T}_{e,k}2$, $\mathbf{T}_{e,k}3$) via the respective communication connection;
e6) determining, for each communication connection, the data difference $dT_{d,n} = T_{s,v}n - \mathbf{T}_{e,k}n$, wherein n is the number of communication connections established;
wherein for transmitting at least one data packet from the communication management device to the mobile node, the communication connection with the smallest difference $dT_{d,n}$ is selected.

10. The method according to claim 9, **characterized in that** for each network wireless interface (31; 32, 33) an average round trip time (RTT) is stored in the mobile node (20) and in the communication management device (170); and that for transmitting at least one data packet from the mobile node to the communication management device (170) and/or vice versa, the communication connection is selected based on the data difference $dT_{u,n}$ or $dT_{d,n}$, respectively, and/or on the average round trip time.

11. The method according to claim 10, **characterized in that** for transmitting at least one data packet from the mobile node (20) to the communication management device (170) and/or vice versa, the communication connection with the lowest round trip time is selected, if a plurality of communication connections have the same data difference.

12. The method according to any of claims 9 to 11,
    **characterized in that**
    for each network wireless interface (31, 32, 33) a predetermined maximum data throughput (MIT) is stored in the mobile node (20) and in the communication management device (170); and that
    for transmitting at least one data packet from the mobile node (20) to the communication management device (170) and/or vice versa, the communication connection (140, 141, 142) is selected based on the data difference $dT_{u,n}$ or $dT_{d,n}$, respectively, on the average round trip time, and/or on the maximum data throughputs.

13. The method according to any of claims 9 to 12,
    **characterized in that**
    for each established communication connection (140, 141, 142) the load currently available is calculated according to equation $L_n = (MIT-T_{s,k}n) /MIT$ for the direction from the mobile node (20) to the communication management device (170), and according to equation $L_n = (MIT-T_{s,v}n) /MIT$ for the direction from the communication management device to the mobile node, wherein MIT is the maximum data throughput of the respective network interface (31, 32, 33), $T_{s,k}n$ is the amount of data transmitted per unit time from the mobile node via the respective communication connection,
    and $T_{s,v}n$ is the amount of data transmitted per unit time from the communication management device (170) via the respective communication connection; and that for transmitting at least one data packet from the mobile node (20) to the communication management device (170) and/or vice versa, the communication connection (140, 141, 142) with the highest currently available load is selected, if a plurality of communication connections have the same data difference $dT_{u,n}$ or $dT_{d,n}$, respectively, the same average round trip time, and/or the same maximum data throughput.

14. The method according to any of claims 9 to 13,
    **characterized in that**
    for transmitting at least one data packet from the mobile node to the communication management device and/or vice versa, the communication connection with minimum overload is selected, which is calculated according to equation $mo = dT_{u,n}/MIT$ or $mO = dT_{d,n}/MIT$, respectively, wherein MIT is the maximum data throughput of the network wireless interface associated with the respective communication connection.

15. The method according to any of claims 1 to 14,
    **characterized in that**
    the current round trip time (RTT) is measured at predetermined times; and that for transmitting at least one data packet from the mobile node to the communication management device and/or vice versa, the communication connection is selected based on the current round trip times measured.

16. The method according to any of claims 1 to 15,
    **characterized in that**
    the mobile node (20) is connected to an internal communication network (180), wherein data intended for an IP subscriber (160) are transmitted from at least one internal subscriber (190, 200) connected to the internal communication network (180) to the mobile node (20); and that the data intended for the internal subscriber (190, 200) are forwarded via the mobile node (20) and the internal communication network (180) to the internal subscriber.

17. A communication system (10) for uninterrupted data transfer between a mobile node and at least one IP subscriber that is connected to a public IP network; comprising
    at least one mobile node (20) which has a plurality of network wireless interfaces (31, 32, 33), a load balancing router (40), and a controller (50);
    at least one access network (100, 130) with a plurality of points of attachment (110, 120; 131) for wireless communication with at least some of the network wireless interfaces (31, 32, 33) of the mobile node (20), wherein the access network (110, 130) is adapted to assign IP addresses to the network wireless interfaces;

a public IP network (150) connected with the at least one access network (110, 130), to which at least one IP subscribers (160) is connected;

at least one communication management device (170) connected to the public IP network (150), wherein the controller (50) of the mobile node (20) is adapted for establishing a communication connection (140, 141, 142) via each network wireless interface (31, 32, 33) which had been assigned an IP address, to the at least one communication management device (170);

wherein the mobile node (20) comprises means for determining the connection quality of each established communication connection;

and wherein the load balancing router (40) selects a communication connection for each data packet to be transmitted or for a group of data packets based on the connection qualities determined; wherein

the communication management device (170) is adapted for receiving data packets that have been transmitted via at least one communication connection, and for forwarding the received data packets over the public IP network (150) to at least one specific IP subscriber (160); **characterized in that**

the mobile node (20) comprises means for counting the amount of data transmitted per unit time ($T_{s,k}1$, $T_{s,k}2$, $T_{s,k}3$) via each communication connection established, and the communication management device (170) comprises means for counting the amount of data received per unit time ($T_{e,v}1$, $T_{e,v}2$, $T_{e,v}3$) via each communication connection established; wherein

the mobile node (20) comprises means for determining the data difference $dT_{u,n}= T_{s,k}n - T_{e,v}n$ for each communication connection, wherein n is the number of communication connections (140, 141, 142) established; and wherein the load balancing router (40) of the mobile node (20) selects the communication connection with the smallest difference $dT_{u,n}$ for transmitting the at least one data packet to the communication management device (170).

18. The communication system according to claim 17,
**characterized in that**
the mobile node (20) assigns a logical address to each communication connection established;
wherein the mobile node (20) comprises a memory (60) which stores the logical address of each communication connection (140, 141, 142) and an IP address ($IP_{BMS1}$) assigned to the communication management device (170); and wherein the communication management device (170) comprises a memory (172) which stores the logical address of each communication connection and the IP addresses of the network wireless interfaces.

19. The communication system as claimed in claim 17 or 18,
**characterized in that**
the communication management device (170) comprises a memory (171) for storing the connection qualities determined, and a load balancing router (173) which selects a communication connection (140, 141, 142) for each data packet or for a group of data packets to be transmitted to the mobile node based on the connection qualities determined; wherein
the communication management device (170) is adapted for receiving data packets transmitted via the public IP network (150), and for forwarding the received data packets to the mobile node (20) via the selected communication connection (140, 141, 142).

20. The communication system according to any of claims 17 to 19, **characterized in that**
the at least one access network (100, 130) is adapted for changing the IP addresses assigned to the network wireless interfaces (31, 32, 33); and that the controller (50) of the mobile node (20) is adapted for establishing a communication connection for the network wireless interface whose IP address has been changed; wherein the mobile node (20) reports the changed IP address to the communication management device (170).

21. The communication system according to any of claims 17 to 20, **characterized in that**
the communication management device (170) comprises means for counting the amount of data transmitted per unit time ($T_{s,v}1$, $T_{s,v}2$, $T_{s,v}3$) via each established communication connection (140, 141, 142), and the mobile node (20) comprises means for counting the amount of data received per unit time ($T_{e,k}1$, $T_{e,k}2$, $T_{e,k}3$) via the respective communication connection;
wherein the communication management device (170) is adapted for determining the data difference $dT_{d,n}= T_{s,v}n - T_{e,k}n$ for each communication connection (140, 141, 142), wherein n is the number of communication connections (140, 141, 142) established;
and wherein the load balancing router (173) of the communication management device (170) selects the communication connection (140, 141, 142) with the smallest difference $dT_{d,n}$ for transmitting at least one data packet to the mobile node (20).

22. The communication system according to any of claims 17 to 21, **characterized in that**
the mobile node (20) and the communication management device (170) each comprise a memory (70; 175) for storing an average round trip time (RTT) for each network wireless interface (31, 32, 33); and that the load balancing router (40; 173) of the mobile node (20) and/or of the communication management device (170) selects the communication connection for transmitting at least one data packet based on the data difference $dT_{u,n}$ or $dT_{d,n}$, respectively, and/or on the average round trip time.

23. The communication system according to claim 22,
**characterized in that**
the load balancing router (40; 173) of the mobile node (20) and/or of the communication management device (170) selects the communication connection with the lowest round trip time for data transfer, if a plurality of communication connections have the same data difference.

24. The communication system according to any of claims 17 to 23, **characterized in that**
for each network wireless interface (31, 32, 33), the mobile node (20) and in the communication management device (170) stores a predetermined maximum data throughput (MIT); and that
the load balancing router (40; 173) of the mobile node and/or of the communication management device selects a communication connection for data transfer based on the data difference $dT_{u,n}$ or $dT_{d,n}$, respectively, on the average round trip time, and/or on the maximum data throughputs.

25. The communication system according to any of claims 17 to 24, **characterized in that**
the load balancing router (40) of the mobile node (20) calculates, for each communication connection (140, 141, 142) available, the load currently available in the direction to the communication management device according to equation $L_n = (MIT - T_{s,k}n) / MIT$, and the load balancing router (173) of the communication management device (170) calculates, for each communication connection (140, 141, 142) available, the load currently available to the mobile node according to equation $L_n = (MIT - T_{s,v}n) / MIT$, wherein MIT is the maximum data throughput of the respective network interface, $T_{s,k}n$ is the amount of data transmitted per unit time from the mobile node (20) via the respective communication connection (140, 141, 142), and $T_{s,v}n$ is the amount of data transmitted per unit time from the communication management device (170) via the respective communication connection (140, 141, 142); and that for transmitting at least one data packet, the load balancing router (40; 173) of the mobile node and/or of the communication management device selects the communication connection with the highest currently available load, if a plurality of communication connections have the same data difference $dT_{u,n}$ or $dT_{d,n}$, respectively, the same average round trip time, and/or the same maximum data throughput.

26. The communication system according to any of claims 17 to 24, **characterized in that**
the load balancing router (40; 173) of the mobile node (20) and/or of the communication management device (170) selects the communication connection with minimum overload which is calculated according to equation $mO = dT_{u,n}/MIT$ or $mO = dT_{d,n}/MIT$, respectively, wherein MIT is the maximum data throughput of the network wireless interface associated with the respective communication connection.

27. The communication system according to any of claims 17 to 26, **characterized by**
means for measuring the current round trip time (RTT) at predetermined times, wherein the load balancing router (40, 173) of the mobile node (20) and/or of the communication management device (170) selects a communication connection (140, 141, 142) for data transfer based on the current round trip times measured.

28. The communication system according to any of claims 18 to 27, **characterized in that** the mobile node (20) connected to an internal communication network (180).

29. The communication system according to claim 28, **characterized in that** the mobile node (20) and the internal communication network (180) are accommodated in a vehicle.

**Revendications**

1. Procédé permettant la transmission de données sans interruption entre un noeud mobile (20) et au moins un correspondant IP (160), qui est relié à un réseau IP public (150), ledit noeud mobile comprenant plusieurs interfaces réseau hertziennes (31, 32, 33), comportant les étapes suivantes :

   a) attribution de respectivement une adresse IP à au moins quelques-unes des interfaces réseau hertziennes ;
   b) établissement d'une liaison de communication (140, 141, 142) entre chaque interface réseau hertzienne (31, 32, 33) à laquelle a été attribuée une adresse IP, et au moins un dispositif de gestion des communications (170) qui est affecté au réseau IP (150) ;
   c) détermination à des instants prédéterminés de la qualité de liaison de chaque liaison de communication établie ;
   d) mise à disposition d'au moins un paquet de données qui doit être transmis à partir du noeud mobile (20) vers au moins un des correspondants IP (160) reliés au réseau IP ;
   e) transmission dudit au moins un paquet de données via au moins une liaison de communication vers le dispositif de gestion des communications (170), ladite au moins une liaison de communication étant sélectionnée par le noeud mobile en fonction des qualités de liaison déterminées ;
   f) transfert dudit au moins un paquet de données à partir du dispositif de gestion des communications (170) via le réseau IP (150) vers le ou les correspondants IP (160) concernés,

   **caractérisé en ce que** l'étape e) comporte les étapes suivantes :

   e1) comptage dans le noeud mobile (20) de la quantité de données envoyées par unité de temps ($T_{s,k}1$, $T_{s,k}2$, $T_{s,k}3$) pour chaque liaison de communication établie ;
   e2) comptage dans le dispositif de gestion des communications (170) de la quantité de données reçues par unité de temps ($T_{e,v}1$, $T_{e,v}2$, $T_{e,v}3$) via la liaison de communication respective ;
   e3) formation de la différence de données $dT_{u,n} = T_{s,k}n - T_{e,v}n$) pour chaque liaison de communication, dans laquelle n est le nombre de liaisons de communication établies ;
   la liaison de communication avec la plus petite différence $dT_{u,n}$ étant sélectionnée pour la transmission dudit au moins un paquet de données depuis le noeud mobile (20) vers le dispositif de gestion des communications (170).

2. Procédé selon la revendication 1, **caractérisé en ce qu'**à chaque liaison de communication (140, 141, 142) établie est attribuée une adresse logique et **en ce que**, après l'établissement de chacune des liaisons de communication, les adresses logiques de celles-ci et l'adresse IP de l'interface réseau hertzienne correspondante sont stockées dans le dispositif de gestion des communications (170) et une adresse IP ($IP_{BMS1}$) affectée au dispositif de gestion des communications (170) est stockée dans le noeud mobile (20), les adresses logiques, les adresses IP des interfaces réseau hertziennes et l'adresse IP du dispositif de gestion des communications étant utilisées pour la transmission des données via les liaisons de communication respectives.

3. Procédé selon la revendication 1 ou 2, **caractérisé en ce que** selon l'étape a), respectivement une adresse IP est affectée aux interfaces réseau hertziennes (31, 32, 33) lorsque le noeud mobile (20) est dans la zone de couverture d'au moins un point de raccordement (110, 120 ; 131) d'au moins un réseau d'accès (100 ; 130).

4. Système selon la revendication 3, **caractérisé en ce que**, en cas de déplacement du noeud mobile (20), respectivement une nouvelle adresse IP est affectée à une ou plusieurs interfaces réseau hertziennes dudit au moins un réseau d'accès, une nouvelle liaison de communication est établie entre les interfaces réseau hertziennes, dont l'adresse IP a été modifiée, et le dispositif de gestion des communications (170), et **en ce que** les nouvelles adresses IP attribuées sont stockées dans le noeud mobile et le dispositif de gestion des communications.

5. Procédé selon l'une quelconque des revendications précédentes, **caractérisé en ce qu'**à chaque noeud mobile (20) est attribué un identificateur individuel qui est stocké dans le dispositif de gestion des communications (170).

6. Procédé selon l'une quelconque des revendications précédentes, **caractérisé en ce que**
   au moins un paquet de données déterminé pour le noeud mobile (20) est transmis à partir d'au moins un correspondant IP (160) relié au réseau IP public (150) vers le dispositif de gestion des communications (170), **en ce que** ledit au moins un paquet de données est transmis ensuite via au moins une liaison de communication existante vers le noeud mobile (20), ladite au moins une liaison de communication étant sélectionnée par le dispositif de gestion des communications (170) en fonction des qualités de liaison déterminées.

7. Procédé selon l'une quelconque des revendications précédentes, **caractérisé en ce que** pour chaque paquet de données à transmettre est choisie une liaison de communication en fonction des qualités de liaison déterminées.

8. Procédé selon l'une quelconque des revendications 1 à 6, **caractérisé en ce que** des paquets de données d'une session sont transmis via la même liaison de communication.

9. Procédé selon l'une quelconque des revendications 6 à 8, **caractérisé en ce que** l'étape e) comporte les étapes suivantes :

   e4) comptage dans le dispositif de gestion des communications (170) des quantités de données envoyées par unité de temps ($T_{s,v}1$, $T_{s,v}2$, $T_{s,v}3$) vers le noeud mobile pour chaque liaison de communication établie ;
   e5) comptage dans le noeud mobile (20) des quantités de données reçues par unité de temps ($T_{e,k}1$, $T_{e,k}2$,

   $T_{e,k}3$) via la liaison de communication respective ;
   e6) formation de la différence de données $dT_{d,n} = T_{s,v}n - T_{e,k}n$) pour chaque liaison de communication, dans laquelle n est le nombre de liaisons de communication établies ;
   la liaison de communication avec la plus petite différence $dT_{d,n}$ étant sélectionnée pour la transmission dudit au moins un paquet de données depuis le dispositif de gestion des communications vers le noeud mobile.

10. Procédé selon la revendication 9, **caractérisé en ce qu'**
   un délai de transfert moyen (Round Trip Time) est stocké dans le noeud mobile (20) et dans le dispositif de gestion des communications (170) pour chaque interface réseau hertzienne (31, 32, 33), et **en ce que**
   pour la transmission d'au moins un paquet de données depuis le noeud mobile vers le dispositif de gestion des communications (170) et/ou inversement, la liaison de communication est sélectionnée en fonction de la différence de données $dT_{u,n}$ ou $dT_{d,n}$ et/ou du délai de transfert moyen.

11. Procédé selon la revendication 10, **caractérisé en ce que** pour la transmission d'au moins un paquet de données depuis le noeud mobile (20) vers le dispositif de gestion des communications (170) et/ou inversement est sélectionnée la liaison de communication avec le plus petit délai de transfert lorsque plusieurs liaisons de communication comportent la même différence de données.

12. Procédé selon l'une quelconque des revendications 9 à 11, **caractérisé en ce qu'**
   une capacité maximale (MIT) est stockée dans le noeud mobile (20) et dans le dispositif de gestion des communications (170) pour chaque interface réseau hertzienne (31, 32, 33), et **en ce que**
   pour la transmission d'au moins un paquet de données depuis le noeud mobile (20) vers le dispositif de gestion des communications (170) et/ou inversement, la liaison de communication (140, 141, 142) est sélectionnée en fonction de la différence de données $dT_{u,n}$ ou $dT_{d,n}$, du délai de transfert moyen et/ou des capacités maximales.

13. Procédé selon l'une quelconque des revendications 9 à 12, **caractérisé en ce que**
   pour chaque liaison de communication (140, 141, 142), la charge actuelle disponible dans le sens à partir du noeud mobile (20) vers le dispositif de gestion des communications (170) est calculée selon l'équation $L_n = (MIT - T_{s,k}n)/MIT$ et dans le sens depuis le dispositif de gestion des communications vers le noeud mobile est calculée selon l'équation $L_n = (MIT - T_{s,v}n)/MIT$, dans lesquelles MIT est la capacité maximale de l'interface réseau (31, 32, 33) respective, $T_{s,k}n$ est la quantité de données envoyée par unité de temps par le noeud mobile via la liaison de communication respective et $T_{s,v}n$ est la quantité de données envoyée par unité de temps par le dispositif de gestion des communications (170) via la liaison de communication respective, et **en ce que**
   pour la transmission d'au moins un paquet de données depuis le noeud mobile (20) vers le dispositif de gestion des communications (170) et/ou inversement est sélectionnée la liaison de communication (140, 141, 142) avec la plus grande charge actuelle disponible, lorsque plusieurs liaisons de communication comportent la même différence de données $dT_{u,n}$ ou $dT_{d,n}$, le même délai de transfert moyen et/ou la même capacité maximale.

14. Procédé selon l'une quelconque des revendications 9 à 13, **caractérisé en ce que** pour la transmission d'au moins un paquet de données depuis le noeud mobile vers le dispositif de gestion des communications et/ou inversement est sélectionnée la liaison de communication avec la surcharge minimale, laquelle est calculée selon l'équation $mO = dT_{u,n}/MIT$ ou $mO = dT_{d,n}/MIT$, dans lesquelles MIT est la capacité maximale de l'interface réseau hertzienne affectée à la liaison de communication respective.

**15.** Procédé selon l'une quelconque des revendications 1 à 14, **caractérisé en ce que** le délai de transfert actuel (RTT) est mesuré à des instants prédéterminés et **en ce que** pour la transmission d'au moins un paquet de données depuis le noeud mobile vers le dispositif de gestion des communications et/ou inversement, la liaison de communication est sélectionnée en fonction des délais de transfert actuels mesurés.

**16.** Procédé selon l'une quelconque des revendications 1 à 15, **caractérisé en ce que** le noeud mobile (20) est relié à un réseau de communication interne (180), des données déterminées pour un correspondant IP (160) étant transmises à partir d'au moins un correspondant interne (190, 200) relié au réseau de communication interne (180) vers le noeud mobile (20) et les données déterminées pour le correspondant interne (190, 200) sont transmises ensuite via le noeud mobile (20) et le réseau de communication interne (180) vers le correspondant interne.

**17.** Système de communication (10) permettant la transmission de données sans interruption entre un noeud mobile et au moins un correspondant IP, qui est relié à un réseau IP public, comportant au moins un noeud mobile (20) qui comporte plusieurs interfaces réseau hertziennes (31, 32, 33), un routeur à répartition de charge (40) et un dispositif de commande (50),
au moins un réseau d'accès (100, 130) avec plusieurs points de raccordement (110, 120 ; 131) pour une communication sans fil avec au moins quelques-unes des interfaces radio hertziennes (31, 32, 33) du noeud mobile (20), ledit réseau d'accès (100, 130) étant configuré pour attribuer des adresses IP aux interfaces radio hertziennes, un réseau IP public (150), qui est relié audit au moins un réseau d'accès (100, 130) et auquel est relié au moins un correspondant IP (160),
au moins un dispositif de gestion des communications (170) relié au réseau IP public (150), le dispositif de commande (50) du noeud mobile (20) étant configuré pour établir une liaison de communication (140, 141, 142) vers ledit au moins un dispositif de gestion des communications (170), via chaque interface radio hertzienne (31, 32, 33) à laquelle a été attribuée une adresse IP,
le noeud mobile (20) comportant un dispositif destiné à déterminer la qualité de chaque liaison de communication établie,
et le routeur à répartition de charge (40) sélectionnant pour chaque paquet de données à transmettre ou pour un groupe de paquets de données une liaison de communication en fonction des qualités de liaison déterminées,
le dispositif de gestion des communications (170) étant configuré pour recevoir des paquets de données transmis via au moins une liaison de communication et pour transférer les paquets de données reçus vers au moins un correspondant IP (160) déterminé via le réseau IP public (150),
**caractérisé en ce que**
le noeud mobile (20) comporte un dispositif permettant de compter la quantité de données ($T_{s,k}1$, $T_{s,k}2$, $T_{s'k}3$) envoyées par unité de temps via chaque liaison de communication établie, et le dispositif de gestion des communications (170) comporte un dispositif permettant de compter la quantité de données ($T_{e,v}1$, $T_{e,v}2$, $T_{e,v}3$) reçues par unité de temps via chaque liaison de communication établie, le noeud mobile (20) comportant un dispositif permettant de former la différence de données $dT_{u,n} = T_{s,k}n - T_{e,v}n$) pour chaque liaison de communication, dans laquelle n est le nombre de liaisons de communication (140, 141, 142) établies, et
le routeur à répartition de charge (40) du noeud mobile (20) sélectionnant la liaison de communication avec la plus petite différence $dT_{u,n}$ pour transmettre ledit au moins un paquet de données vers le dispositif de gestion des communications (170).

**18.** Système de communication selon la revendication 17, **caractérisé en ce que** le noeud mobile (20) attribue une adresse logique à chaque liaison de communication établie, ledit noeud mobile (20) comportant une mémoire (60), dans laquelle sont stockées les adresses logiques de chaque liaison de communication (140, 141, 142) et une adresse IP ($IP_{BMS1}$) attribuée au dispositif de gestion des communications (170), et ledit dispositif de gestion des communications (170) comportant une mémoire (172), dans laquelle sont stockées les adresses logiques de chaque liaison de communication et les adresses IP des interfaces radio hertziennes.

**19.** Système de communication selon la revendication 17 ou 18, **caractérisé en ce que** le dispositif de gestion des communications (170) comporte une mémoire permettant de stocker (171) les qualités de liaison déterminées, et un routeur à répartition de charge (173) qui, pour chaque paquet de données ou pour un groupe de paquets de données qui doivent être transmis vers le noeud mobile, sélectionne une liaison de communication (140, 141, 142) en fonction des qualités de liaison déterminées, ledit dispositif de gestion des communications (170) étant configuré pour recevoir des paquets de données transmis via le réseau IP public (150) et pour transférer les paquets de données reçus vers le noeud mobile (20) via la liaison de communication (140, 141, 142) sélectionnée.

20. Système de communication selon l'une quelconque des revendications 17 à 19, **caractérisé en ce que** ledit au moins un réseau d'accès (100, 130) est configuré pour modifier les adresses IP attribuées aux interfaces radio hertziennes (31, 32, 33), **en ce que** le dispositif de commande (50) du noeud mobile (20) est configuré pour établir une liaison de communication concernant l'interface radio hertzienne dont l'adresse IP a été modifiée, ledit noeud mobile (20) communiquant l'adresse IP modifiée au dispositif de gestion des communications (170).

21. Système de communication selon l'une quelconque des revendications 17 à 20, **caractérisé en ce que** le dispositif de gestion des communications (170) comporte un dispositif permettant de compter les quantités de données ($T_{s,v}1$, $T_{s,v}2$, $T_{s,v}3$) envoyées par unité de temps via chaque liaison de communication (140, 141, 142) établie, et le noeud mobile (20) comporte un dispositif permettant de compter les quantités de données ($\mathbf{T}_{e,k}1$, $\mathbf{T}_{e,k}2$, $\mathbf{T}_{e,k}3$) reçues par unité de temps via la liaison de communication respective, ledit dispositif de gestion des communications (170) étant configuré pour former la différence de données $dT_{d,n} - T_{s,v}n - T_{e,k}n$ pour chaque liaison de communication (140, 141, 142), dans laquelle n est le nombre de liaisons de communication (140, 141, 142) établies, et le routeur à répartition de charge (173) du dispositif de gestion des communications (170) sélectionnant la liaison de communication (140, 141, 142) avec la plus petite différence $dT_{d,n}$ pour la transmission d'au moins un paquet de données vers le noeud mobile (20).

22. Système de communication selon l'une quelconque des revendications 17 à 21, **caractérisé en ce que** le noeud mobile (20) et le dispositif de gestion des communications (170) comportent chacun une mémoire (70 ; 175) pour stocker un délai de transfert moyen (Round Trip Time) pour chaque interface radio hertzienne (31, 32, 33), et **en ce que**, pour transmettre au moins un paquet de données, le routeur à répartition de charge (40 ; 173) du noeud mobile (20) et/ou du dispositif de gestion des communications (170) sélectionnent la liaison de communication en fonction de la différence de données $dT_{u,n}$ ou $dT_{d,n}$ et/ou du délai de transfert moyen.

23. Système de communication selon la revendication 22, **caractérisé en ce que** le routeur à répartition de charge (40 ; 173) du noeud mobile (20) et/ou du dispositif de gestion des communications (170) sélectionnent pour la transmission des données la liaison de communication avec le plus petit délai de transfert lorsque plusieurs liaisons de communication comportent la même différence de données.

24. Système de communication selon l'une quelconque des revendications 17 à 23, **caractérisé en ce que**
pour chaque interface réseau hertzienne (31, 32, 33), une capacité maximale (MIT) est stockée dans le noeud mobile (20) et dans le dispositif de gestion des communications (170), et **en ce que**
le routeur à répartition de charge (40 ; 173) du noeud mobile et/ou du dispositif de gestion des communications sélectionne pour la transmission des données une liaison de communication en fonction de la différence de données $dT_{u,n}$ ou $dT_{d,n}$, du délai de transfert moyen et/ou des capacités maximales.

25. Système de communication selon l'une quelconque des revendications 17 à 24, **caractérisé en ce que**
le routeur à répartition de charge (40) du noeud mobile (20) calcule pour chaque liaison de communication (140, 141, 142) disponible la charge actuelle disponible dans le sens vers le dispositif de gestion des communications selon l'équation $L_n = (MIT - T_{s,k}n)/MIT$ et le routeur à répartition de charge (173) du dispositif de gestion des communications (170) calcule pour chaque liaison de communication (140, 141, 142) disponible la charge actuelle disponible dans le sens vers le noeud mobile selon l'équation $L_n = (MIT - T_{s,v}n)/MIT$, dans lesquelles MIT est la capacité maximale de l'interface réseau respective, $T_{s,k}n$ est la quantité de données envoyée par unité de temps par le noeud mobile (20) via la liaison de communication (140, 141, 142) respective et $T_{s,v}n$ est la quantité de données envoyée par unité de temps par le dispositif de gestion des communications (170) via la liaison de communication (140, 141, 142) respective, et **en ce que**
pour la transmission d'au moins un paquet de données, le routeur à répartition de charge (40 ; 173) du noeud mobile et/ou du dispositif de gestion des communications sélectionne la liaison de communication avec la plus grande charge actuelle disponible, lorsque plusieurs liaisons de communication comportent la même différence de données $dT_{u,n}$ ou $dT_{d,n}$, le même délai de transfert moyen et/ou la même capacité maximale.

26. Système de communication selon l'une quelconque des revendications 17 à 24, **caractérisé en ce que** le routeur à répartition de charge (40 ; 173) du noeud mobile (20) et/ou du dispositif de gestion des communications (170) sélectionne la liaison de communication avec la surcharge minimale, laquelle est calculée selon l'équation $mO = dT_{u,n}/MIT$ ou $mO = dT_{d,n}/MIT$, dans lesquelles MIT est la capacité maximale de l'interface réseau hertzienne affectée à la liaison de communication respective.

**27.** Système de communication selon l'une quelconque des revendications 17 à 26, **caractérisé par** un dispositif permettant de mesurer le délai de transfert actuel (RTT) à des instants prédéterminés, 1 le routeur à répartition de charge (40 ; 173) du noeud mobile (20) et/ou du dispositif de gestion des communications (170) sélectionnant pour la transmission des données une liaison de communication (140, 141, 142) en fonction des délais de transfert actuels mesurés.

**28.** Système de communication selon l'une quelconque des revendications 18 à 27, **caractérisé en ce que** le noeud mobile (20) est relié à un réseau de communication interne (180).

**29.** Système de communication selon la revendication 28, **caractérisé en ce que** le noeud mobile (20) et le réseau de communication interne (180) sont logés dans un véhicule.

Figur

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050185653 A1

**In der Beschreibung aufgeführte Nicht-Patentliteratur**

- **AUST S et al.** Policy Based Mobile Ipv6 Handover Decision (POLIMAND); draft-iponair-dna-polimand-02.txt. *IETF,* 21. Februar 2005

- **R. WAKIKAWA et al.** Enhanced Mobile Network Protocol for Its Robustness and Policy Based Routing. *IEICE Transactions on Communications, Communications Society,* Marz 2004